(19) Europäisches Patentamt / European Patent Office / Office européen des brevets

(11) **EP 2 278 844 A1**

(12) **EUROPEAN PATENT APPLICATION**
published in accordance with Art. 153(4) EPC

(43) Date of publication:
**26.01.2011 Bulletin 2011/04**

(21) Application number: **09738890.4**

(22) Date of filing: **01.05.2009**

(51) Int Cl.:
*H04W 72/04* (2009.01)    *H04J 1/00* (2006.01)
*H04J 11/00* (2006.01)

(86) International application number:
**PCT/JP2009/058587**

(87) International publication number:
**WO 2009/133953 (05.11.2009 Gazette 2009/45)**

(84) Designated Contracting States:
**AT BE BG CH CY CZ DE DK EE ES FI FR GB GR HR HU IE IS IT LI LT LU LV MC MK MT NL NO PL PT RO SE SI SK TR**
Designated Extension States:
**AL BA RS**

(30) Priority: **02.05.2008 JP 2008120786**
**02.05.2008 JP 2008120788**
**11.08.2008 JP 2008207424**

(71) Applicant: **NTT DOCOMO, INC.**
**Chiyoda-ku**
**Tokyo 100-6150 (JP)**

(72) Inventors:
• **ISHII, Hiroyuki**
**Chiyoda-ku**
**Tokyo 100-6150 (JP)**
• **UMESH, Anil**
**Chiyoda-ku**
**Tokyo 100-6150 (JP)**

(74) Representative: **HOFFMANN EITLE**
**Patent- und Rechtsanwälte**
**Arabellastraße 4**
**81925 München (DE)**

(54) **RADIO BASE STATION AND COMMUNICATION CONTROL METHOD**

(57) A radio base station includes: a measurement unit which measures a resource use amount in each time frame within predetermined period; a downlink persistent allocation signal transmission unit which transmits to a mobile station, a persistent allocation signal indicating a downlink radio resource allocation start moment; and a downlink communication unit which transmit downlink data using downlink radio resource starting at the downlink radio resource allocation start moment. The downlink persistent allocation signal transmission unit decides the downlink radio resource allocation start moment in accordance with a resource use amount in each time frame.

FIG. 2

radio base station eNB

11 RB USE AMOUNT CALCULATION PROCESSOR UNIT

12 DRX ON DURATION SETTING PROCESSOR UNIT

13 TALK SPURT STATE MANAGER UNIT

16 STATE MISMATCH DETECTION PROCESSOR UNIT

17 PDCCH TRANSMISSION PROCESSOR UNIT

15 ACKNOWLEDGEMENT INFORMATION RECEPTION PROCESSOR UNIT

14 PDSCH TRANSMISSION PROCESSOR UNIT

EP 2 278 844 A1

**Description**

TECHNICAL FIELD

The present invention relates to a radio base station configured to transmit downlink data to a mobile station by using a downlink radio resource persistently allocated with a predetermined period at and after a downlink radio resource allocation start moment, and to a communication control method.

BACKGROUND ART

A communication system as a successor of a W-CDMA system and a HSDPA system, namely, a long term evolution (LTE) system has been considered by the W-CDMA standardization organization 3GPP, and the formulation of specifications thereof is underway.
As radio access schemes in the LTE system, OFDMA is under consideration for use in downlink, and single-carrier frequency division multiple access (SC-FDMA) is under consideration for use in uplink.
The OFDMA is a scheme for dividing a frequency band into multiple narrow frequency bands (subcarriers) and transmitting data on each frequency band. The OFDMA can achieve high-speed transmission and improve frequency use efficiency by densely arranging the subcarriers in such a manner that the subcarriers do not interfere with each other while partially overlapping with each other on the frequency.
The SC-FDMA is a transmission scheme capable of reducing interference among multiple terminals by dividing a frequency band and allowing terminals to perform transmissions using different frequency bands. The SC-FDMA has a feature of reducing a change in transmission power, and thus can achieve low power consumption of each terminal and wide coverage.
The LTE system is a system in which one or more than one physical channel is shared by multiple mobile stations for either of the uplink and downlink to perform communications.
The channel shared by the multiple mobile stations is generally called a "shared channel. " In the LTE system, a "physical uplink shared channel (PUSCH)" is used in the uplink and a "physical downlink shared channel (PDSCH)" is used in the downlink.
Such shared channels include, as transport channels, an "uplink shared channel (UL-SCH)" for the uplink and a "downlink shared channel (DL-SCH)" for the downlink.
The communication system using the shared channels as described above needs to select mobile station UE to which the shared channel is allocated for each sub-frame (per 1 ms in the LTE system), and send the selected mobile station UE a signal indicating the allocation of the shared channel.
In the LTE system, a control channel used for the signaling is called a "physical downlink control channel (PDCCH)" or a "downlink L1/L2 control channel (DL L1/L2 CCH)."
Note that the above process of selecting mobile station UE to which the shared channel is allocated for each sub-frame is generally called "scheduling." In this case, the process may also be called "dynamic scheduling" because the mobile station UE to which the shared channel is allocated is dynamically selected for each sub-frame. Further, the "shared channel is allocated" described above may be expressed as "radio resource for the shared channel is allocated."
Information on the physical downlink control channel includes, for example, "downlink scheduling information," "uplink scheduling grant," and the like.
The downlink scheduling information" includes, for example, information on allocation of downlink resource blocks for the downlink shared channel, an ID of the UE, the number of streams, information on precoding vector, a data size, a modulation scheme, information on a hybrid automatic repeat request, and the like.
The "uplink scheduling grant" includes, for example, information on allocation of uplink resource blocks for the uplink shared channel, an ID of the UE, a data size, a modulation scheme, uplink transmission power information, information on a demodulation reference signal in uplink MIMO, and the like.
Note that the "downlink scheduling information" and "uplink scheduling grant" described above may be collectively called "downlink control information (DCI)."
On the other hand, in "Persistent scheduling" under consideration for implementing VoIP and the like, a radio base station eNB is configured to persistently allocate the downlink radio resource (PDSCH) described above to a mobile station UE with a predetermined period at and after the sub-frame (downlink radio resource allocation start moment) at which the downlink scheduling information is transmitted to the mobile station through the PDCCH.
Note that the "Persistent scheduling" may be called "Semi-Persistent scheduling (SPS)."

SUMMARY OF THE INVENTION

Generally, in the mobile communication system, an effect called a "statistical multiplexing effect" increases radio capacity.

Specifically, there is a difference between the number of mobile stations UE having connections with the radio base station eNB and the number of mobile stations UE actually exchanging data. The mobile stations UE exchanging data are statistically dispersed. As a result, the number of mobile stations UE having connections with the radio base station is increased. This mechanism increases the radio capacity.

In the Persistent scheduling, as described above, the downlink radio resource (PDSCH) is persistently allocated to a mobile station UE with a predetermined period at and after the sub-frame (downlink radio resource allocation start moment) at which the downlink scheduling information is transmitted to the mobile station UE through the PDCCH. In such a case, it is preferable that the same number of mobile stations UE be multiplexed at every downlink radio resource allocation start moment.

For example, when the predetermined period is 20 ms, the above statistical multiplexing effect is more likely to be obtained in the case where six mobile stations UE are multiplexed at a certain 1 ms and six mobile stations UE are multiplexed at another 1 ms than the case where ten mobile stations UE are multiplexed at a certain 1 ms and only two mobile stations UE are multiplexed at another 1 ms. This is because, in the above example, the statistical multiplexing effect is very small in the 1 ms at which only two mobile stations UE are multiplexed.

Moreover, generally, in the mobile communication system, efficient allocation of radio resources can increase the communication capacity.

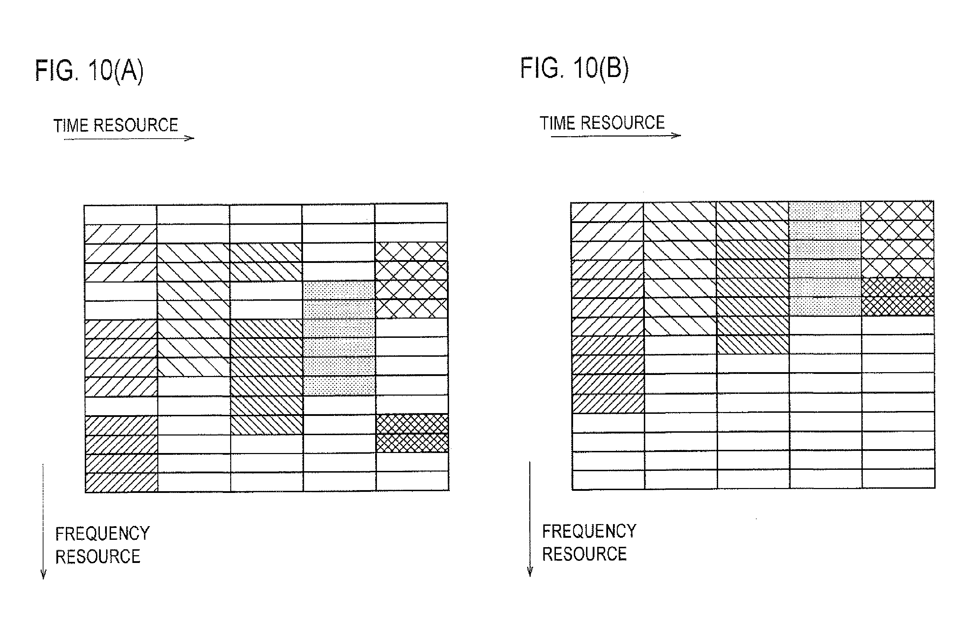

For example, when comparing Fig. 10A and Fig. 10B, Fig. 10B shows more orderly allocation of radio resources, which allows the remaining radio resources (white portions) to be efficiently used. Thus, more efficient communications can be achieved.

On the other hand, in the "Persistent scheduling" described above, the downlink radio resource allocation start moment is specified by the uplink scheduling grant or the downlink scheduling information, and the radio resources are periodically and persistently allocated starting at the downlink radio resource allocation start moment.

In this case, unlike the "dynamic scheduling," the radio resources in a frequency direction cannot be flexibly allocated for each sub-frame (per 1 ms). As a result, inefficient radio resource allocation as shown in Fig. 10A is more likely to be performed.

Moreover, in the mobile communication system, common channels such as a broadcast channel and a paging channel are transmitted in the downlink, and common channels such as a random access channel are periodically transmitted in the uplink.

When a conflict occurs between the radio resources of the "Persistent scheduling" described above and the radio resources of the common channels, radio resources are preferentially allocated to the common channels. For this reason, the "Persistent scheduling" needs to be applied in consideration of transmission of the common channels.

The present invention has been made in consideration of the foregoing problem, and has an objective to provide a radio base station and a communication control method, which are capable of implementing a highly efficient mobile communication system by setting downlink radio resources to be allocated by "Persistent scheduling" so as to maximize a statistical multiplexing effect.

In addition, the present invention has been made in consideration of the foregoing problem, and has an objective to provide a radio base station and a communication control method, which are capable of implementing a highly efficient mobile communication system by properly setting downlink radio resources to be allocated by "Persistent scheduling."

A first aspect of the present invention is summarized as a radio base station configured to transmit downlink data to a mobile station by using a downlink radio resource persistently allocated with a predetermined period at and after a downlink radio resource allocation start moment, the radio base station comprise a measurement unit configured to measure a resource use amount in each time frame within the predetermined period, a downlink persistent allocation signal transmitter configured to transmit a persistent allocation signal indicating the downlink radio resource allocation start moment to the mobile station and a downlink communication unit configured to transmit the downlink data using the downlink radio resource allocated at and after the downlink radio resource allocation start moment wherein the downlink persistent allocation signal transmitter determines the downlink radio resource allocation start moment based on the resource use amount of each time frame.

In the first aspect, further comprising a setting unit configured to set a on duration in discontinuous reception control for the mobile station, based on the resource use amount in each time frame within the predetermined period, wherein the downlink persistent allocation signal transmitter determines the downlink radio resource allocation start moment so that the downlink radio resource allocation start moment is included in the on duration of the discontinuous reception control.

In the first aspect, wherein the downlink persistent allocation signal transmitter determines the downlink radio resource allocation start moment so that a time frame having the smallest resource use amount serves as the downlink radio resource allocation start moment.

In the first aspect, wherein the setting unit sets the on duration of the discontinuous reception control so that an equal resource use amount is used in the time frames.

In the first aspect, wherein the setting unit sets the on duration of the discontinuous reception control so as to minimize the sum of the resource use amounts of the time frames within the on duration of the discontinuous reception control.

In the first aspect, wherein the downlink persistent allocation signal transmitter determines the downlink radio resource allocation start moment so that the timing of receiving acknowledgement information for the downlink data does not coincide with the timing of receiving at least one of an uplink control signal and an uplink sounding reference signal.

In the first aspect, wherein the downlink persistent allocation signal transmitter determines the downlink radio resource allocation start moment so that an available radio resource for acknowledgement information can be specified by the persistent allocation signal.

In the first aspect, further comprising an uplink persistent allocation signal transmitter configured to transmit a persistent allocation signal indicating an uplink radio resource allocation start moment to the mobile station and an uplink communication unit configured to receive uplink data by using an uplink radio resource allocated at and after the uplink radio resource allocation start moment, wherein the downlink persistent allocation signal transmitter determines the downlink radio resource allocation start moment so that the timing of receiving acknowledgement information for the downlink data does not coincide with the timing of receiving the uplink data.

In the first aspect, wherein the measurement unit measures the resource use amount based on at least one of a resource allocated to a broadcast channel, a resource allocated to a synchronization signal, a resource allocated to a dynamic broadcast channel, a resource allocated to a paging channel, a resource allocated to a random access response channel, a resource allocated to an MBMS channel, and the downlink radio resources allocated to all the mobile stations in a cell.

A second aspect of the present invention is summarized as a communication control method by which a radio base station transmits downlink data a mobile station by using a downlink radio resource persistently allocated with a predetermined period at and after the downlink radio resource allocation start moment, the method comprise a step A of measuring, by the radio base station, a resource use amount in each time frame within the predetermined period, a step B of transmitting a persistent allocation signal indicating the downlink radio resource allocation start moment from the radio base station to the mobile station and a step C of transmitting the downlink data from the radio base station by using the downlink radio resource allocated at and after the downlink radio resource allocation start moment, wherein in the step B, the radio base station determines the downlink radio resource allocation start moment based on the resource use amount of each time frame.

A third aspect of the present invention is summarized as a radio base station configured to transmit downlink data to a mobile station by using a downlink radio resource persistently allocated with a predetermined period at and after a downlink radio resource allocation start moment, the radio base station comprise a downlink persistent allocation signal transmitter configured to transmit a persistent allocation signal indicating the downlink radio resource allocation start moment to the mobile station; and
a downlink communication unit configured to transmit the downlink data using the downlink radio resource allocated at and after the downlink radio resource allocation start moment, wherein
the downlink persistent allocation signal transmitter determines the downlink radio resource allocation start moment so that the timing of receiving acknowledgement information for the downlink data does not coincide with the timing of receiving at least one of an uplink control signal and an uplink sounding reference signal.

In the third aspect, wherein the uplink control signal is any of downlink radio quality information and a scheduling request.

A fourth aspect of the present invention is summarized as a radio base station configured to transmit downlink data to a mobile station by using a downlink radio resource persistently allocated with a predetermined period at and after a downlink radio resource allocation start moment, and configured to receive uplink data by using an uplink radio resource persistently allocated with a predetermined period at and after an uplink radio resource allocation start moment, the radio base station comprise a downlink persistent allocation signal transmitter configured to transmit a persistent allocation signal indicating the downlink radio resource allocation start moment to the mobile station, a downlink communication unit configured to transmit the downlink data by using the downlink radio resource allocated at and after the downlink radio resource allocation start moment, an uplink persistent allocation signal transmitter configured to transmit a persistent allocation signal indicating the uplink radio resource allocation start moment to the mobile station and an uplink communication unit configured to receive the uplink data by using the uplink radio resource allocated at and after the uplink radio resource allocation start moment, wherein the downlink persistent allocation signal transmitter determines the downlink radio resource allocation start moment so that the timing of receiving acknowledgement information for the downlink data does not coincide with the timing of receiving the uplink data.

A fifth aspect of the present invention is summarized as a radio base station configured to transmit downlink data to a mobile station by using a downlink radio resource persistently allocated with a predetermined period at and after a downlink radio resource allocation start moment, the radio base station comprise a downlink persistent allocation signal transmitter configured to transmit a persistent allocation signal indicating the downlink radio resource allocation start moment to the mobile station and a downlink communication unit configured to transmit the downlink data using the downlink radio resource allocated at and after the downlink radio resource allocation start moment, wherein the downlink persistent allocation signal transmitter determines the downlink radio resource allocation start moment so that an available radio resource for acknowledgement information can be specified by the persistent allocation signal.

A sixth aspect of the present invention is summarized as a radio base station configured to transmit downlink data to a mobile station by using a downlink radio resource persistently allocated with a predetermined period at and after a downlink radio resource allocation start moment, the radio base station comprise a downlink persistent allocation signal transmitter configured to transmit a persistent allocation signal indicating the downlink radio resource allocation start moment and the downlink radio resource to the mobile station and a downlink communication unit configured to transmit the downlink data by using the downlink radio resource allocated at and after the downlink radio resource allocation start moment, wherein the downlink persistent allocation signal transmitter determines the downlink radio resource so that the resource does not overlap with a resource allocated to a broadcast channel, a resource allocated to a dynamic broadcast channel, a resource allocated to a paging channel, a resource allocated to a random access response channel, and a resource allocated to an MBMS channel.

In the sixth aspect, wherein the downlink persistent allocation signal transmitter allocates the downlink radio resources from one end of an entire radio resource space in a system, and allocates the resources allocated to the broadcast channel, dynamic broadcast channel, paging channel, random access response channel, and MBMS channel from the other end of the entire radio resource space.

In the sixth aspect, wherein the downlink persistent allocation signal transmitter transmits the persistent allocation signal when a downlink radio resource determined based on downlink quality information and an error rate notified from the mobile station is different from the downlink radio resource.

In the sixth aspect, wherein the downlink persistent allocation signal transmitter transmits the persistent allocation signal when a predetermined or longer time passes after the transmission of the persistent allocation signal.

A seventh aspect of the present invention is summarized as a radio base station configured to transmit downlink data to a mobile station by using a downlink radio resource persistently allocated with a predetermined period at and after a downlink radio resource allocation start moment, the radio base station comprise a transmission state manager configured to manage a transmission state of the mobile station, a downlink persistent allocation signal transmitter configured to transmit a persistent allocation signal indicating the downlink radio resource allocation start moment and the downlink radio resource to the mobile station and

a downlink communication unit configured to transmit the downlink data by using the downlink radio resource allocated at and after the downlink radio resource allocation start moment, wherein the downlink persistent allocation signal transmitter transmits the persistent allocation signal when the transmission state of the mobile station is Off, and when a size of data addressed to the mobile station is larger than a first threshold and smaller than a second threshold.

A eighth aspect of the present invention is summarized as a radio base station configured to transmit downlink data to a mobile station by using a downlink radio resource persistently allocated with a predetermined period at and after a downlink radio resource allocation start moment, the radio base station comprise a downlink persistent allocation signal transmitter configured to transmit a persistent allocation signal indicating the downlink radio resource allocation start moment and the downlink radio resource to the mobile station and

a downlink communication unit configured to transmit the downlink data by using the downlink radio resource allocated at and after the downlink radio resource allocation start moment, and to receive acknowledgement information for the downlink data, wherein the downlink persistent allocation signal transmitter transmits the persistent allocation signal when the result of decoding the acknowledgement information for initial transmission of the downlink data immediately after the downlink radio resource allocation start moment is DTX, or when NACK or DTX is obtained at least a predetermined number of times in a row, as the result of decoding the acknowledgement information for initial transmission of the downlink data

A ninth aspect of the present invention is summarized as a communication control method by which a radio base station transmits downlink data to a mobile station by using a downlink radio resource persistently allocated with a predetermined period at and after the downlink radio resource allocation start moment, the method comprise a step A of transmitting a persistent allocation signal indicating the downlink radio resource allocation start moment and the downlink radio resource from the radio base station to the mobile station and a step B of transmitting the downlink data from the radio base station by using the downlink radio resource allocated at and after the downlink radio resource allocation start moment determined based on the persistent allocation signal, wherein in the step A, the radio base station determines the downlink radio resource so that the resource does not overlap with a resource allocated to a broadcast channel, a resource allocated to a dynamic broadcast channel, a resource allocated to a paging channel, a resource allocated to a random access response channel, and a resource allocated to an MBMS channel.

A tenth aspect of the present invention is summarized as a communication control method by which a radio base station transmits downlink data to a mobile station by using a downlink radio resource persistently allocated with a predetermined period at and after the downlink radio resource allocation start moment, the method comprise a step A of managing a transmission state of the mobile station by the radio base station, a step B of transmitting a persistent allocation signal indicating the downlink radio resource allocation start moment and the downlink radio resource from the radio base station to the mobile station and a step C of transmitting the downlink data from the radio base station by using the downlink radio resource allocated at and after the downlink radio resource allocation start moment determined based on the persistent allocation signal, wherein in the step B, the radio base station transmits the persistent allocation signal when the transmission state of the mobile station is Off, and when a size of data addressed to the mobile station is larger than a first threshold and smaller than a second threshold.

A eleventh aspect of the present invention is summarized as a communication control method by which a radio base station transmits downlink data to a mobile station by using a downlink radio resource persistently allocated with a predetermined period at and after the downlink radio resource allocation start moment, the method comprise a step A of transmitting a persistent allocation signal indicating the downlink radio resource allocation start moment and the downlink radio resource from the radio base station to the mobile station and a step B of transmitting the downlink data from the radio base station by using the downlink radio resource allocated at and after the downlink radio resource allocation start moment determined based on the persistent allocation signal, and receiving by the radio base station acknowledgement information for the downlink data, wherein in the step A, the radio base station transmits the persistent allocation signal when the result of decoding the acknowledgement information for initial transmission of the downlink data immediately after the downlink radio resource allocation start moment is DTX, or when NACK or DTX is obtained at least a predetermined number of times in a row, as the result of decoding the acknowledgement information for initial transmission of the downlink data.

Effects of the Invention

As described above, according to the present invention, it is possible to provide a radio base station and a communication control method, which are capable of realizing a highly efficient mobile communication system by setting downlink radio resources to be allocated by "Persistent scheduling" so as to maximize a statistical multiplexing effect.

According to the present invention, it is possible to provide a radio base station and a communication control method, which are capable of realizing a highly efficient mobile communication system by properly setting downlink radio resources to be allocated by "Persistent scheduling."

Brief Description of Drawings

Fig. 1 is an overall configuration diagram of a mobile communication system according to a first embodiment of the present invention.

Fig. 2 is a functional block diagram of a radio base station according to the first embodiment of the present invention.

Fig. 3 is a diagram for explaining an operation of an RB use amount calculator in the radio base station according to the first embodiment of the present invention.

Fig. 4 is a flowchart for explaining an operation of the RB use amount calculator in the radio base station according to the first embodiment of the present invention.

Fig. 5 is a diagram for explaining an operation of a DRX ON duration setting processor unit in the radio base station according to the first embodiment of the present invention.

Fig. 6 is a flowchart for explaining an operation of a Talk Spurt state manager unit in the radio base station according to the first embodiment of the present invention.

Fig. 7 is a diagram showing an example of a "Persistent DL TFR table" used by the Talk Spurt state manager unit in the radio base station according to the first embodiment of the present invention.

Fig. 8 is a diagram showing an example of a transmission format selected by the Talk Spurt state manager unit in the radio base station according to the first embodiment of the present invention.

Fig. 9 is a diagram showing an example of a "Persistent DL TFR table (Initial)" used by the Talk Spurt state manager unit in the radio base station according to the first embodiment of the present invention.

Fig. 10 is a diagram showing an example of a radio resource allocation method in the mobile communication system.

Fig. 11 is a diagram for explaining an operation of the Talk Spurt state manager unit in the radio base station according to the first embodiment of the present invention.

Fig. 12 is a diagram for explaining an operation of the Talk Spurt state manager unit in the radio base station according to the first embodiment of the present invention.

Description of Embodiments

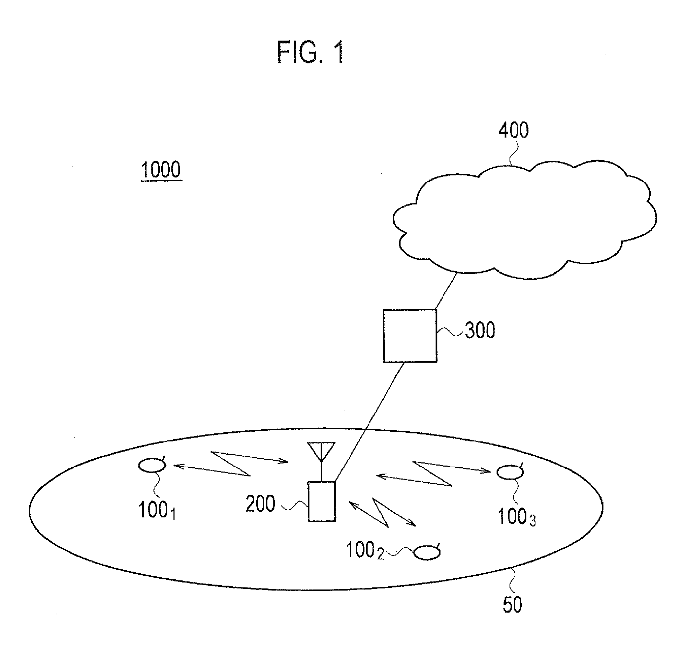

(Mobile Communication System According to First Embodiment of the Invention)
A mobile communication system according to a first embodiment of the present invention is described with reference to Figs. 1 to 12. Note that, in this embodiment, a description is given by taking a mobile communication system of an LTE scheme as an example. However, the present invention is also applicable to mobile communication systems using other schemes.

Fig. 1 shows a mobile communication system 1000 using a radio base station (eNB: eNode B) 200 according to the embodiment of the present invention.

The mobile communication system 1000 is a system to which "Evolved UTRA and UTRAN (otherwise known as LTE or Super 3G) is applied, for example.

The mobile communication system 1000 includes the radio base station 200 and multiple mobile stations (UE: user equipment) $100_1$ to 100n (n is an integer greater than 0).

The radio base station 200 is connected to a higher-layer station, e.g., an access gateway device 300. The access gateway device 300 is connected to a core network 400.

The access gateway device may be called a mobility management entity/serving gateway (MME/SGW).

Here, the mobile station 100n is configured to communicate with the radio base station 200 in a cell 50 under "Evolved UTRA and UTRAN."

In the following description, the mobile stations $100_1$ to 100n are referred to as the mobile station 100n, unless otherwise noted, because they have the same configuration, function, and condition. For convenience of explanation, it is the mobile station 100n which communicates with the radio base station 200, but more generally the mobile station 100n includes a mobile terminal as well as a fixed terminal. The mobile station UE may also be called a user equipment.

The mobile communication system 1000 employs orthogonal frequency division multiple access (OFDM) for downlink and single carrier frequency division multiple access (SC-FDMA) for uplink as radio access schemes.

As described above, the OFDMA is a multi-carrier transmission scheme for performing communications by dividing a frequency band into multiple narrow frequency bands (subcarriers) and mapping data onto each subcarrier. On the other hand, the SC-FDMA is a single-carrier transmission scheme for reducing interference among multiple terminals by dividing a frequency band for each terminal and using different frequency bands among the terminals.

<Communication Channel>

Next, various communication channels used in the mobile communication system 1000 are described.

In the downlink, a "physical downlink shared channel (PDSCH) " and a "physical downlink control channel (PDCCH)" are used. The PDSCH is shared among the mobile stations 100n. Here, the "physical downlink control channel (PDCCH)" is also called a "downlink L1/L2 control channel." Information mapped onto the "physical downlink control channel (PDCCH)" may be called "downlink control information (DCI)."

User data, that is, a normal data signal is transmitted by the "physical downlink shared channel (PDSCH)."

Note that a transport channel mapped onto the "physical downlink shared channel (PDSCH)" is a "downlink shared channel (DL-SCH)."

Also, the "physical downlink control channel (PDCCH)" transmits downlink/uplink scheduling grants, transmission power control command bit, and the like.

The "downlink (DL) scheduling grant" includes, for example, an ID of a user who performs communications using the "physical downlink shared channel (PDSCH)" and information on a transport format of the user data (i.e., information on a data size, a modulation scheme and a HARQ, downlink resource block allocation information, and the like).

Note that the downlink scheduling grant may also be called downlink scheduling information.

The "uplink (UL) scheduling grant" also includes, for example, an ID of a user who performs communications using a "physical uplink shared channel (PUSCH)" and information on a transport format of the user data (i.e., information on a data size and a modulation scheme, uplink resource block allocation information, information on transmission power of the uplink shared channel, and the like).

Here, the "uplink resource block" corresponds to a frequency resource and is also called a "resource unit."

An OFDM symbol onto which the "physical downlink control channel (PDCCH)" is mapped includes a "physical control channel format indicator channel (PCFICH)" and a "physical HARQ indicator channel (PHICH)."

To be more specific, the "physical downlink control channel (PDCCH)," the "physical control channel format indicator channel (PCFICH)" and the "physical HARQ indicator channel (PHICH)" are transmitted after being multiplexed on not more than a predetermined number of OFDM symbols.

The "physical control channel format indicator channel (PCFICH)" is a channel for notifying the mobile station UE of the number of OFDM symbols onto which the "physical downlink control channel (PDCCH)" is mapped.

The "physical HARQ indicator channel (PHICH)" is a channel for transmitting acknowledgement information for the "physical uplink shared channel (PUSCH)."

Quality information on the downlink may be called a "channel state indicator (CSI)" that is an indicator summing up "CQI," "pre-coding matrix indicator (PMI)" and "rank indicator (RI)."

The acknowledgement information is expressed by an "ACK" that is a positive acknowledgment or an "NACK" that is a negative acknowledgment.

Note that, in the above example, the "physical control channel format indicator channel (PCFICH)" and the "physical HARQ indicator channel (PHICH)" are defined as channels in a parallel relationship with the "physical downlink control channel (PDCCH)."

However, the "physical control channel format indicator channel (PCFTCH)" and the "physical HARQ indicator channel (PHICH)" may be defined as information elements included in the "physical downlink control channel (PDCCH)."

Moreover, in the downlink, a "downlink reference signal (DLRS)" is transmitted as a pilot signal commonly used by the mobile stations UE.

The "downlink reference signal" is used for channel estimation for decoding of the "physical downlink shared channel (PDSC)," "physical downlink control channel (PDCCH)," "physical control channel format indicator channel (PCFICH)," and "physical HARQ indicator channel (PHICH)" described above, and for calculation of CQI that is radio quality information in the downlink.

In the uplink, the "physical uplink shared channel (PUSCH)" shared by the mobile stations 100n, and an uplink control channel for LTE are used.

The uplink control channel for LTE includes two types, i. e. , a channel to be transmitted as a part of the "physical uplink shared channel (PUSCH)" and a channel to be frequency-multiplexed.

The channel to be frequency-multiplexed is called a "physical uplink control channel (PUCCH)."

User data, that is, a normal data signal is transmitted by the "physical uplink shared channel (PUSCH)."

A transport channel mapped onto the "physical uplink shared channel (PUSCH)" is an "uplink shared channel (UL-SCH)."

Downlink quality information (CQI: channel quality indicator) to be used for scheduling of the "physical downlink shared channel (PDSCH)" and adaptive modulation and coding scheme (AMCS), and acknowledgement information on the "physical downlink shared channel (PDSCH)" are transmitted on the uplink control channel for LTE.

The contents of the acknowledgement information are expressed as either a positive acknowledgment (ACK) or a negative acknowledgment (NACK).

<Radio Base Station 200 According to First Embodiment of the Invention>

The radio base station 200 according to this embodiment is configured to transmit downlink data to the mobile station 100 by using the downlink radio resource (PDSCH) persistently allocated with a predetermined period at and after the downlink radio resource allocation start moment.

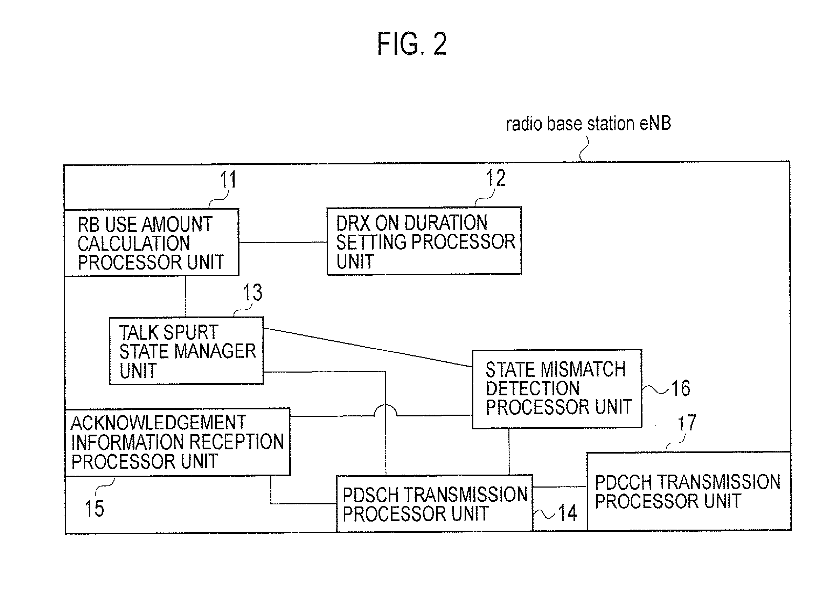

As shown in Fig. 2, the radio base station 200 according to this embodiment includes an RB use amount calculation processor unit 11, a DRX ON duration setting processor unit 12, a Talk Spurt state manager unit 13, a PDSCH transmission processor unit 14, a acknowledgement information reception processor unit 15, a state mismatch detection processor unit 16, and a PDCCH transmission processor unit 17.

The RB use amount calculation processor unit 11 is configured to, as described later, calculate a resource use amount for each sub-frame (time frame) within a transmission period (predetermined period) of Persistent scheduling.

Here, the "resource" means a frequency resource, and the "resource use amount" means more specifically the amount or number of resource blocks.

In the LTE scheme, one resource block is "180 kHz," and one sub-frame is "1 ms."

Accordingly, when the above transmission period (predetermined period) is "20 ms," the RB use amount calculation processor unit 11 calculates a resource use amount for each of twenty sub-frames.

The DRX ON duration setting processor unit 12 is configured to, as described later, set a on duration (an ON section in a DRX state) during discontinuous reception control by the mobile stations 100n in the cell 50.

To be more specific, the DRX ON duration setting processor unit 12 is configured to set a DEX ON duration based on the resource use amount calculated by the RB use amount calculation processor unit 11.

The Talk Spurt state manager unit 13 is configured to, as described later, manage a Talk Spurt state of each of the mobile stations in the cell, that is, to carry out management regarding whether or not to perform resource allocation by Persistent scheduling.

Note that "resource allocation by Persistent scheduling" corresponds to transmission of downlink data using the "physical downlink shared channel (PDSCH)," that is, the downlink radio resource persistently allocated with a predetermined period at and after the downlink radio resource allocation start moment.

Note that the Talk Spurt state manager unit 13 may perform "resource allocation by Persistent scheduling" for uplink in addition to the above "resource allocation by Persistent scheduling" for downlink.

In the resource allocation by Persistent scheduling for uplink, as in the case of the downlink, an uplink radio resource allocation start moment is determined, and then the uplink radio resource allocation start moment and uplink radio resource allocated at and after the uplink radio resource allocation start moment are notified to the mobile station UE by a persistent allocation signal. The radio base station is configured to receive an uplink data signal (UL-SCH) transmitted from the mobile station UE through the uplink radio resource.

In this case, for example, the PDSCH transmission processor unit 14 may be configured to perform the uplink reception processing described above.

The PDSCH transmission processor unit 14 is configured to, as described later, send the mobile station 100n whose Talk Spurt state is "ON" downlink data using the "physical downlink shared channel (PDSCH)," that is, the downlink radio resource persistently allocated with a predetermined period at and after the downlink radio resource allocation start moment.

The acknowledgement information reception processor unit 15 is configured to, as described later, receive the acknowledgement information on "physical downlink shared channel (PDSCH)", that is the downlink radio resource.

The state mismatch detection processor unit 16 is configured to, as described later, detect a state mismatch between the radio base station eNB and the mobile station UE.

Here, the "state mismatch" means, for example, a state where the radio base station eNB has performed the downlink radio resource allocation by Persistent scheduling to the mobile station UE, but the mobile station UE is not aware that the downlink radio resource allocation has been performed.

The PDCCH transmission processor unit 17 is configured to, as described later, when it is determined that an initial transmission resource for "Persistent scheduling" is notified to the mobile station UE by "downlink scheduling information," transmit the PDCCH onto which the "downlink scheduling information" is mapped, that is, a persistent allocation signal to the mobile station UE.

Note that the persistent allocation signal, i.e., the PDCCH indicating the initial transmission resource for Persistent scheduling may be called a PDCCH obtained by masking a CRC using an SPS-RNTI. Here, SPS stands for Semi-Persistent Scheduling.

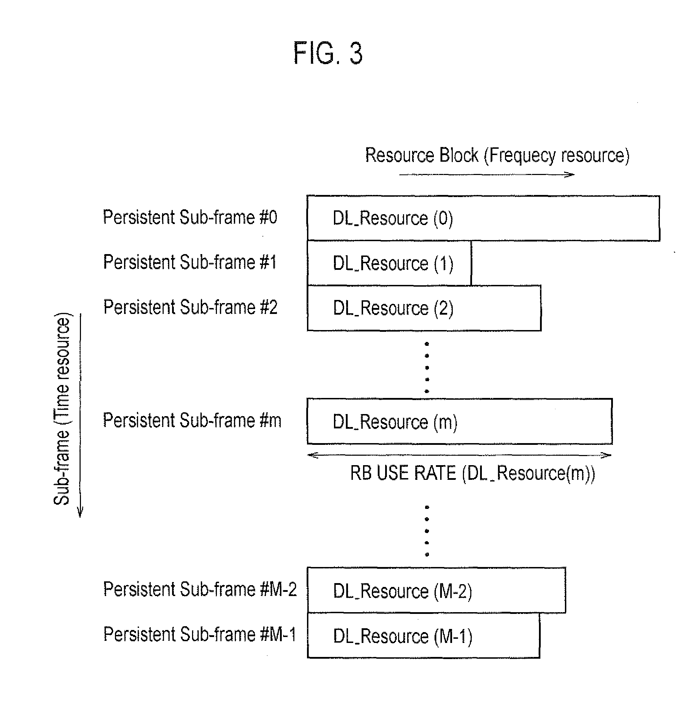

Resource block use amount calculation processing performed by the RB use amount calculation processor unit 11 is described in detail with reference to Fig. 3.

As shown in Fig. 3, sub-frames within a predetermined period are defined as "Persistent Sub-frames." The RB use amount calculation processor unit 11 is configured to calculate a resource use amount (hereinafter described as "DL_Resource (m)") for each "Persistent Sub-frame."

Here, "m" represents an index of "Persistent Sub-frame," and "M" or represents a total number (predetermined period) of the "Persistent Sub-frames."

The resource use amount DL_Resource (m) for each "Persistent Sub-frame" corresponds to the number of resource blocks (RBs) to be allocated to a "SCH (synchronization signal)/P-BCH (broadcast channel)," a "D-BCH (dynamic broadcast channels)," "PCH (paging channels)," "RACH response channels (random access response channels)," "MBMS channels," and "DL-SCHs" to which Persistent scheduling is applied, in a "Persistent Sub-frame #m."

Note that the D-BCH may be, more specifically, an SIB1 or a system information (SI) message. In other words, the SIB1 and SI message may be collectively called the D-BCH. The SI may include one or more system information blocks (SIBs) other than the SIB1.

Note that the resource use amount DL_Resource (m) for each "Persistent Sub-frame" is used for processing performed by the Talk Spurt state manager unit 12 to be described later.

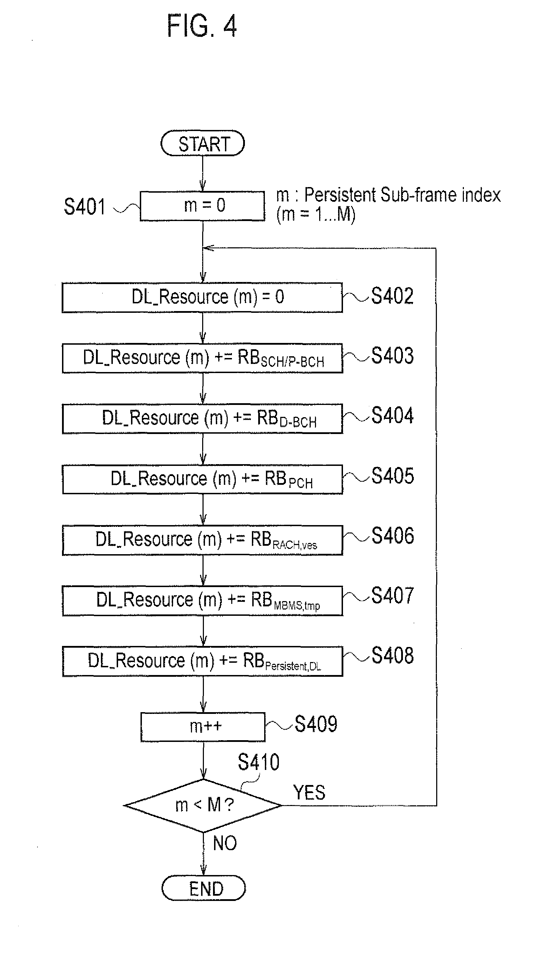

Processing of calculating the resource use amount for each "Persistent Sub-frame" is described with reference to Fig. 4.

In a loop of "m= 1, 2, ..., M" shown in Fig. 4, "M" is the total number of "Persistent Sub-frames."

The resource use amount is measured for each "Persistent Sub-frame" by the loop including Steps S401, S409 and S410.

First, in Step S402, the value of "DL_Resource (m)" in the "Persistent Sub-frame #m" is initialized by the following formula.

$$DL\_Resource\ (m) = 0$$

Then, in Step S403, a value of "$RB_{SCH/P-BCH}$" is added to the value of "DL_Resource (m) " by the following formula.

$$\mathtt{DL\_Resource\ (m)\ +=\ RB_{SCH/P\text{-}BCH}}$$

Note that "$RB_{SCH/P\text{-}BCH}$" is calculated as follows based on whether or not a "synchronization channel (SCH)" or a "physical broadcast channel (P-BCH) " is transmitted in the "Persistent Sub-frame #m." Here, the "SCH" is also called a synchronization signal.

When the "SCH" or the "P-BCH" is transmitted in the "Persistent Sub-frame #m," "$RB_{SCH/P\text{-}BCH} = 6$" is established; otherwise, "$RB_{SCH/P\text{-}BCH} = 0$."

Note that, when the "SCH" or the "P-BCH" is transmitted in the "Persistent Sub-frame #m," "$RB_{SCH/P\text{-}BCH} = 7$" may be established instead of "$RB_{SCH/P\text{-}BCH} = 6$."

By the above processing of Step S403, the number of resource blocks to be allocated to the "SCH" or the "P-BCH" is counted as the resource use amount DL_Resource (m), when the "SCH" or the "P-BCH" is transmitted in the "Persistent Sub-frame #m".

Then, in Step S404, a value of "$RB_{D\text{-}BCH}$" is added to the value of "DL_Resource (m) " by the following formula.

$$\mathtt{DL\_Resource\ (m)\ +=\ RB_{D\text{-}BCH}}$$

Note that "$RB_{D\text{-}BCH}$" is calculated as follows based on whether or not there is a possibility that a "D-BCH (dynamic broadcast channel)" is transmitted in the "persistent Sub-frame #m."

When the "D-BCH" is transmitted in the "Persistent Sub-frame #m," "$RB_{D\text{-}BCH} = RB_{S1} \times weight_{S1} + RB_{S2} \times weight_{S2} + ...$" is established; otherwise, "$RB_{D\text{-}BCH} = 0$."

Here, "S1, S2..." are indices indicating the types of the "D-BCH," and "$RB_{S1}$" and "$RB_{S2}$" are each the number of resource blocks allocated to the "D-BCH" of S1 and "D-BCH" of S2. Also, "$weight_{S2}$" and "$weight_{S2}$" are weighting factors.

Note that S1, S2, ... may be called SIB1, SI-1, SI-2, ... . Here, SI stands for System Information.

Specifically, the number of resource blocks is counted for every "D-BCH" that is likely to be transmitted in the "Persistent Sub-frame #m."

Note that the transmission period of the "D-BCH" may be longer than the predetermined period described above. In such a case, the "D-BCH" may or may not be transmitted in a certain "Persistent Sub-frame #m." Accordingly, the weighting factors "$weight_{S1}$, $weight_{S2}$, ... " can control the influence of the above transmission period of the "D-BCH" on the resource use amount.

For example, when the predetermined period is "20 ms" and the transmission period of the "D-BCH" is "80 ms," the value of the weighting factor may be set to "weight= 20/80= 0.25."

Alternatively, when the predetermined period is "20 ms" and the transmission period of the "D-BCH" is "80 ms," the value of the weighting factor may be set to "weight= 1.0" for the worst-case scenario.

By the above processing of Step S404, the number of resource blocks to be allocated to the "D-BCH" is counted as the resource use amount DL_Resource (m), when the "D-BCH" is likely to be transmitted in the "Persistent Sub-frame #m".

Then, in Step S405, a value of "$RB_{PCH}$" is added to the value of "DL_Resource (m)" by the following formula.

$$\mathtt{DL\_Resource\ (m)\ +=\ RB_{PCH}}$$

"$RB_{PCH}$" is calculated as follows based on a time average value ($RB_{PCH}$, average) of the number of resource blocks (number of RBs) of the "PCH (paging channel)" previously transmitted in the "Persistent Sub-frame #m."

$$\mathtt{RB_{PCH} = RB_{PCH,\ average} \times weight_{PCH}}$$

Note that the weighting factor "$weight_{PCH}$" is a factor for adjusting how many resources for the "PCH" are to be secured.

For example, when there is a large variation in the resources for the "PCH" and extra resources need to be secured for the "PCH," the weighting factor "weight$_{PCH}$" may be set to "weight$_{PCH}$= 2. "

Alternatively, when a variation in the resources for the "PCH" is small and there is no need to secure extra resources for the "PCH," the weighting factor "weight$_{PCH}$" may be set to "weight$_{PCH}$= 1."

By the above processing of Step S405, the number of resource blocks to be allocated to the "PCH" on average in the "Persistent Sub-frame #m" is counted as the resource use amount DL_Resource (m).

Then, in Step S406, a value of "RB$_{RACH, res}$" is added to the value of "DL_Resource (m) " by the following formula.

$$DL\_Resource\ (m)\ +=\ RB_{RACH,\ res}$$

"RB$_{PACH, res}$" is calculated as follows based on a time average value (RB$_{RACHres, average}$) of the number of resource blocks (number of RBs) of "RACH response" previously transmitted in the "Persistent Sub-frame #m."

$$RB_{RACH, res}=\ RB_{RACHres,\ average} \times weight_{RACHres}$$

Note that the weighting factor "weight$_{RACHres}$" is a factor for adjusting how many resources for the "RACH response" are to be secured. For example, when there is a large variation in the resources for the "RACH response" and extra resources need to be secured for the "RACH response", the weighting factor "weight$_{PCH}$" may be set to "weight$_{PCH}$= 2."

Alternatively, when a variation in the resources for the "RACH response" is small and there is no need to secure extra resources for the "RACH response," the weighting factor "weight$_{RACHres}$" may be set to "weight$_{PCH}$= 1."

By the above processing of Step S406, the number of resource blocks to be allocated to the "RACH response" on average in the "Persistent Sub-frame #m" is counted as the resource use amount DL_Resource (m).

Then, in Step S407, a value of "RB$_{MBMS}$ " is added to the value of "DL_Reso-urce (m)" by the following formula.

$$DL\_Resource\ (m)\ +=\ RB_{MBMS,\ tmp}$$

Note that "RB$_{MBMS}$" is calculated as follows based on whether or not there is a possibility that a "MBMS" is transmitted in the "Persistent Sub-frame #m."

When a "MBMS channel" is transmitted in the "Persistent Sub-frame #m," "RB$_{MBMS, tmp}$= RB$_{MBMS}$×weight$_{MBMS}$" is established; otherwise, "RB$_{MBMS, tmp}$= 0."

The "weight$_{MBMS}$" is a weighting factor for correcting the influence of the transmission period of the MBMS.

By the above processing of Step S407, the number of resource blocks to be allocated to the "MBMS channel" is counted as the resource use amount DL_Resource (m), when the "MBMS channel" is likely to be transmitted in the "Persistent Sub-frame #m".

Then, in Step S408, a value of "RB$_{Persistent, DL}$" is added to the value of "DL_Resource (m) " by the following formula.

$$DL\_Resource\ (m)\ +=\ RB_{Persistent,\ DL}$$

"RB$_{Persistent, DL}$" is calculated as follows based on a time average value (RB$_{Persistent, average, DL}$) of the number of resource blocks (number of RBs) of the downlink data (including both newly transmitted and retransmitted data) to which resources are allocated by Persistent scheduling, the downlink data being previously transmitted in the "Persistent Sub-frame #m."

$$RB_{Persistent,\ DL} = RB_{Persistent,\ average,\ DL} \times weight_{persistent,\ DL}$$

Note that, in fact, also for the downlink data to which resources are allocated by "Dynamic scheduling," when it includes downlink data to which resources are to be allocated by "Persistent scheduling," the number of resource blocks thereof may be calculated as the "number of resource blocks (number of RBs) of the downlink data (including both newly transmitted and retransmitted data) to which resources are allocated by Persistent scheduling."

When multiple pieces of downlink data to which resources are allocated by "Persistent scheduling" are transmitted in the "Persistent Sub-frame #m," the sum of the numbers of RBs of the multiple pieces of downlink data to which resources are allocated by "Persistent scheduling" is set to be the "number of resource blocks (number of RBs) of the downlink data (including both newly transmitted and retransmitted data) to which resources are allocated by Persistent scheduling."

Note that the weighting factor "weight$_{Persistent,\ DL}$" is a factor for adjusting how many resources are to be secured for the downlink data to which resources are allocated by "Persistent scheduling."

For example, when there is a large variation in the resources for the downlink data to which resources are allocated by "Persistent scheduling" and extra resources need to be secured for the downlink data to which resources are allocated by "Persistent scheduling", the weighting factor "weight$_{Persistent,\ DL}$" may be set to "weight$_{Persistent,\ DL} = 2$."

Alternatively, when a variation in the resources for the downlink data to which resources are allocated by "Persistent scheduling" is small and there is no need to secure extra resources for the downlink data to which resources are allocated by "Persistent scheduling," the weighting factor "weight$_{Persistent,\ DL}$" may be set to "weight$_{Persisistent,\ DL} = 1$."

By the above processing of Step S408, the number of resource blocks to be allocated to the downlink data to which resources are allocated by "Persistent scheduling" in the "Persistent Sub-frame #m" is counted as the resource use amount DL_Resource (m).

The resource use amount for each sub-frame within a predetermined period is thus calculated by the above processing of Steps S401 to S410.

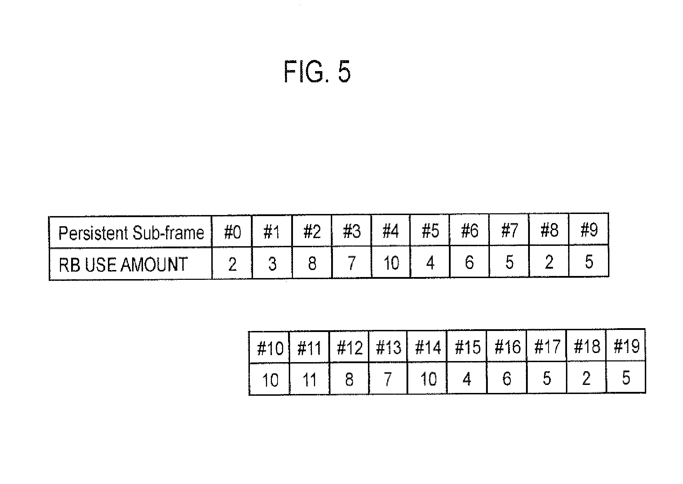

DRX ON duration setting processing performed by the DRX ON duration setting processor unit 12 is described in detail with reference to Fig. 5.

Generally, in the mobile communication system, "DRX control (discontinuous reception control)" is performed for battery saving of the mobile station UE.

The DRX control is performed for communications between the radio base station eNB and the mobile station UE by dividing time frames into a section (ON section, i.e., a on duration in discontinuous reception control) in which a signal is received from the radio base station eNB and a section (OFF section, i.e., a off-duration in discontinuous reception control) in which no signal is received from the radio base station eNB, when there is no data to be exchanged or when an amount of data to be exchanged is an amount of data that is transmittable only by the resource allocated by "Persistent scheduling."

In this case, the mobile station UE needs not to transmit an uplink signal nor receive a downlink signal in the OFF section. As a result, power consumption of the mobile station UE can be reduced.

The DRX ON duration setting processor unit 12 may set the DRX ON duration of the mobile station UE based on the resource use amount (RB use amount) calculated by the RB use amount calculation processor unit 11.

For example, the DRX ON duration setting processor unit 12 may set the DRX ON duration so as to minimize the resource use amount of the "Persistent Sub-frames" included in the ON duration.

To be more specific, it is assumed that, for example, a predetermined period is "20 ms," "Persistent Sub-frames #0 to #19" are defined, and resource use amounts are "2, 3, ..., 2, and 5", respectively, as shown in Fig. 5.

Here, when the length of the ON duration is "2 ms (2 sub-frames)," an ON duration that minimizes the resource use amount (RB use amount) of the "Persistent Sub-frames" included in the ON duration is "Persistent Sub-frames #0 and #1."

Accordingly, the DRX ON duration setting processor unit 12 sets "Persistent Sub-frames #0 and #1" as the DRX ON duration of the mobile station UE.

Note that, in "Persistent Sub-frames" set as the DRX ON duration for a certain mobile station UE, as described later, downlink data is transmitted to the mobile station UE by the downlink radio resource allocated by "Persistent scheduling." As a result, the resource use amount is increased.

For this reason, the above processing of setting the DRX ON duration so as to minimize the resource use amount of the "Persistent Sub-frames" included in the ON duration is performed sequentially for the respective mobile stations UE in the cell. AS a result, the DRX ON duration is set so that the resource use amount is equally set for the respective "Persistent Sub-frames."

Note that "the resource use amount is equally set for the respective Persistent Sub-frames" means that the resources are more orderly allocated. This consequently means that the resources are efficiently allocated.

In the above example, the DRX ON duration setting processor unit 12 sets the DRX ON duration so as to minimize the resource use amount of the "Persistent Sub-frames" included in the ON duration. However, the DRX ON duration setting processor unit 12 may also set the DRX ON duration so as to randomize the position of the ON duration between the mobile stations UE in the cell.

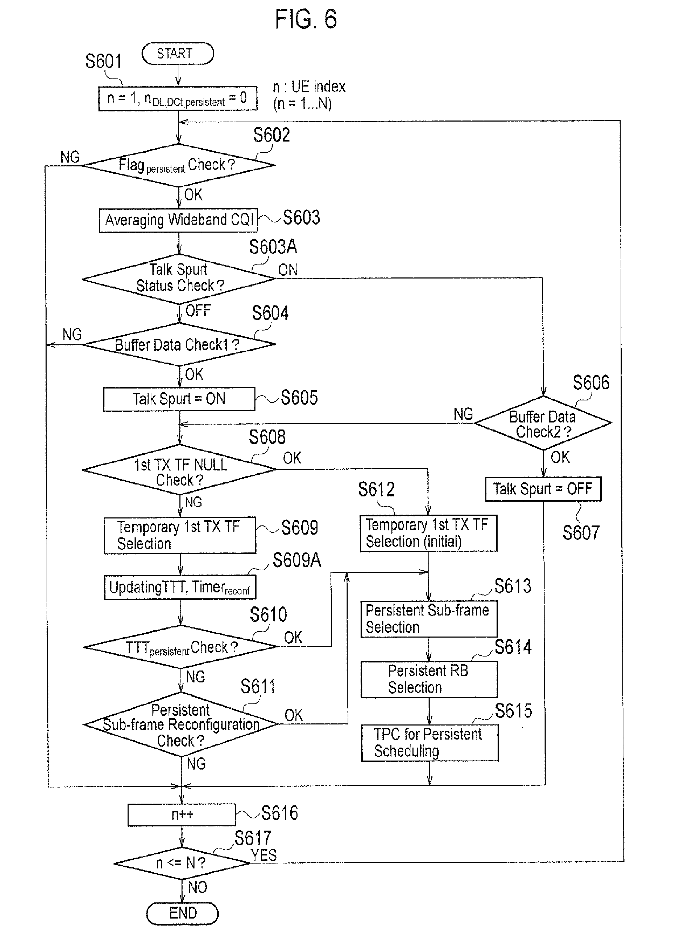

Talk Spurt state management by the Talk Spurt state manager unit 13 is described in detail with reference to Fig. 6.

In this processing, the Talk Spurt state manager unit 13 manages a Talk Spurt state of the mobile station UE in the downlink, to which resources are allocated by "Persistent scheduling."

The following processing is applied to the mobile stations UE (including both the mobile station UE in a DRX state and the mobile station UE in a NON-DRX state) for which the sub-frame is the leading sub-frame in the DRX ON duration.

Note that, "n" represents an index of the "mobile station UE for which the sub-frame is the leading sub-frame in the DRX ON duration, " and "N" represents the total number of the "mobile stations UE for which the sub-frame is the leading sub-frame in the DRX ON duration."

Note that, when the DRX control is not performed in the cell, processing described below may be performed once in the predetermined period for all the mobile stations UE in the cell to which resources are allocated by "Persistent scheduling."

The following variables are defined in the following processing.

DL_1$^{st}$_TX_TF
Temporary_DL_1$^{st}$_TX_TF
OLD_DL_1$^{st}$_TX_TF
UE_DL_1$^{st}$_TX_TF
DL_1$^{st}$_TX_Persistent_Subframe
OLD_DL_1$^{st}$_TX_Persistent_Subframe
Candidate_Subframe
DL_1$^{st}$_TX_Persistent_RB
OLD_DL_1$^{st}$_TX_Persistent_RB
Candidate_RB

As shown in Fig. 6, the processing is applied by the loop including Steps S601, S616 and S617 to the mobile stations UE (including both the mobile station UE in the DRX state and the mobile station UE in the NON-DRX state) for which the sub-frame is the leading sub-frame in the DRX ON duration.

In Step S602, it is determined whether or not resources are allocated to the mobile station UE #n by "Persistent scheduling."

Here, whether or not resources are allocated by "Persistent scheduling" may be determined based on whether or not a logical channel defining that the resources are allocated by "Persistent scheduling" is set.

In other words, it is determined whether or not a logical channel having "Flag$_{persistent}$" is set for the mobile station UE.

When a logical channel having "Flag$_{persistent}$= 1" is set, OK is returned, and otherwise NG is returned.

Note that "Flag$_{persistent}$= 1" indicates that there is set a logical channel to which resources are allocated by "Persistent scheduling." On the other hand, "Flag$_{persistent}$= 0" indicates that there is set no logical channel to which resources are allocated by "Persistent scheduling."

When the result of Step S602 is OK, the processing proceeds to Step S603. On the other hand, when the result of Step S602 is NG, the processing proceeds to Step S616.

In Step S603, a time average value "CQI$_{wideband, average}$" of CQI (Wideband CQI: hereinafter described as CQI$_{wideband}$) over the system bandwidth, which is notified from the mobile station UE, is calculated based on the following formula.

When there are two CQIs during Dual codeword of MIMO, the "CQI$_{wideband, average}$" may be calculated using a dB average of the two CQIs.

Note that, in the following formula, the CQI value may be calculated as a true value or a dB value.

$$CQI_{wideband,\ average} = (1-\alpha) \times CQI_{wideband} + \alpha \times CQI_{wideband,\ average}$$

$\alpha$: forgetting factor for averaging Wideband CQI Further, the following offset processing is applied to the "$CQI_{wideband, average}$."
$$CQI_{adjusted} = CQI_{wideband,\ average} + Offset_{persistent}$$

Here, the offset value "$Offset_{persistent}$" is adjusted using an outer-loop (processing expressed by the following formula) based on the acknowledgement information (including a CRC check result and both initially transmitted and retransmitted information) on the "DL-SCH" to which "Persistent scheduling" is applied.

The "$Offset_{persistent}$" is adjusted for each mobile station UE. "i" represents an index of the mobile station UE.

[Formula]

$$Offset_{persistent,i} = \begin{cases} Offset_{persistent,i} + \Delta_{adj}^{(persistent)} \times BLER_{target}^{(persistent)} & Input = "Ack" \\ Offset_{persistent,i} - \Delta_{adj}^{(persistent)} \times (1 - BLER_{target}^{(persistent)}) & Input = "Nack" \\ Offset_{persistent,i} & Input = "DTX" \end{cases}$$

After Step S603, the processing proceeds to Step S603A.

In Step S603A (Talk Spurt Status Check), it is determined whether the state of the mobile station UE is "DL Talk Spurt state= ON" or "DL Talk Spurt state= OFF."

Note that the "DL Talk Spurt state" of the mobile station UE is considered to be "OFF" when it is not set to be any state.

When the result of the "Talk Spurt Status Check" is "OFF," the processing proceeds to Step S604. On the other hand, when the result of the "Talk Spurt Status Check" is "ON," the processing proceeds to "Buffer Data Check 2" in Step S606.

Here, "DL Talk Spurt state= ON" means a state where downlink radio resources are allocated by "Persistent scheduling."

That is, "DL Talk Spurt state= ON" means a state where downlink data is transmitted to the mobile station UE using a downlink radio resource allocated at and after the downlink radio resource allocation start moment, the downlink radio resource being persistently allocated with a predetermined period.

Here, "DL Talk Spurt state= OFF" means a state where no downlink radio resource is allocated by "Persistent scheduling."

In Step S604 (Buffer Data Check 1), the radio base station eNB makes a determination on the logical channel of the mobile station UE, to which "Persistent scheduling" is applied, regarding whether or not there is data that is transmittable and the data size is not more than a first threshold "$Threshold_{data\_size}$" and not less than a second threshold "$Threshold_{data\_size,SID}$."

When there is transmittable data and the data size is not more than the first threshold "$Threshold_{data\_size}$" and not less than the second threshold "$Threshold_{data\_size,SID}$," "OK" is returned, and otherwise "NG" is returned.

When the result of Step S604 (Buffer Data Check 1) is "OK," the processing proceeds to Step S605 (Talk Spurt= ON). On the other hand, when the result of Step S604 (Buffer Data Check 1) is "NG," the processing proceeds to Step S616 (n++).

In Step S605 (Talk Spurt= ON), the state of the mobile station UE is set to "DL Talk Spurt state= ON."

After Step S605 (Talk Spurt= ON), the processing proceeds to Step S608 (1st TX TF NULL Check).

The effect of the processing in Steps S604 and S605 is described below.

Since the downlink radio resource is persistently allocated in "Persistent scheduling," the size of the transmittable data has an upper limit.

When the size of the transmittable data is larger than the upper limit, not the "Persistent scheduling" but "Dynamic scheduling" needs to be used to allocate the downlink radio resources.

That is, when the size of the transmittable data is larger than the upper limit, it cannot be determined that the downlink radio resources are allocated by "Persistent scheduling" even if there is data to be transmitted. Accordingly, determination is made as NG in the above processing.

Note that, in the above processing, the upper limit corresponds to the first threshold "$Threshold_{data\_size}$."

Moreover, for example, in the case of a VoIP service and the like, packets called "SID packets" are transmitted during silence.

The SID packets are those transmitted during silence, and are not those transmitted at a constant transmission rate, such as a voice. Therefore, resource allocation by "Persistent scheduling" should not be performed for the SID packets.

That is, resource allocation by "Dynamic scheduling" needs to be performed for the SID packets.

For this reason, a lower limit is set in determination of whether or not there is data in a transmission buffer. When the size of the transmittable data is smaller than the lower limit, it is determined that the downlink radio resources are not to be allocated by "Persistent scheduling" even if there is data to be transmitted. Accordingly, determination is made as "NG" in the above processing.

Note that, in the above processing, the lower limit corresponds to the second threshold "$Threshold_{data\_size,SID}$."

In Step S606 (Buffer Data Check 2), the radio base station eNB makes a determination on the logical channel of the mobile station UE, to which "Persistent scheduling" is applied, regarding whether or not a state without data that is transmittable has continued for "$Timer_{BDC2}$" or more.

For the logical channel of the mobile station UE, to which "Persistent scheduling" is applied, when the state without data that is transmittable has continued for "$Timer_{BDC2}$" or more, "OK" is returned, and otherwise "NG" is returned.

Note that, when the uplink synchronization state of the mobile station UE is NG, the radio base station eNB may return OK in this processing regardless of the determination on the logical channel of the mobile station UE, to which "Persistent scheduling" is applied, regarding whether or not a state without data that is transmittable has continued for "$Timer_{BDC2}$" or more.

Here, the "uplink synchronization state is NG" may be, for example, a state where the UL synchronization state is not established or a state where a time alignment timer for maintaining a UL timing synchronization has expired or is not activated.

When the result of Step S606 "Buffer Data Check 2" is "OK," the processing proceeds to Step S607 (Talk Spurt= OFF). On the other hand, when the result of Step S606 "Buffer Data Check 2" is "NG," the processing proceeds to Step S616 "1st TX TF NULL Check."

In Step S607, the state of the mobile station UE is set to "DL Talk Spurt state= OFF." In this event, the state of the mobile station UE is set to 'DL_1st_TX_TF= NULL."

Further, the initial transmission resources for "Persistent scheduling," which have been allocated to the mobile station UE, are released.

Note that the "initial transmission resources for Persistent scheduling" mean downlink radio resources to be allocated by Persistent scheduling.

The release of the initial transmission resources may be implicitly performed or may be explicitly performed by signaling of an RRC message or the like.

For example, the following shows the case where the release of the initial transmission resources is explicitly performed. The radio base station eNB notifies the mobile station UE of downlink scheduling information instructing the release of the initial transmission resources in the immediate sub-frame within DRX reception timing (DRX ON duration) of the mobile station UE.

Note that the radio base station eNB may notify the mobile station UE of the downlink scheduling information regardless of whether or not the UL synchronization state of the mobile station UE is NG.

Here, the "UL synchronization state is NG" may be, for example, the state where the UL synchronization state is not established or the state where the time alignment timer for maintaining the UL timing synchronization has expired or is not activated.

When the UL synchronization is established between the radio base station eNB and the mobile station UE, the radio base station eNB may perform the above release of the initial transmission resources upon receipt of acknowledgement information ACK in response to the downlink scheduling information.

On the other hand, when the UL synchronization is not established between the radio base station eNB and the mobile station UE, the radio base station eNB may perform the above release of the initial transmission resources after transmitting the downlink scheduling information.

The effect of the processing in Steps S606 and S607 is described below.

For example, there is a case where there are no packets to be transmitted even during a conversation, when packets to which resources are allocated by "Persistent scheduling" are voice packets.

That is, there is a case where there is no data to be transmitted at transmission timing of "Persistent scheduling" even when there is an ongoing conversation.

In such a case, if it is determined in one transmission timing that the conversation is finished, i.e., "Talk Spurt" is finished, resource allocation by "Persistent scheduling" needs to be performed again immediately after such determination. This is inefficient.

To avoid this, a timer is defined to perform processing of determining that a transition to a "silent mode" is made when it is determined that there is no data to be transmitted while the timer is running. Accordingly, "ON/OFF" of the "Talk Spurt state" can be properly determined. Note that the timer corresponds to the "Timer$_{BDC2}$' described above.

In Step S608 (1st TX TF NULL Check), it is determined whether or not "DL_1st_TX_TF" of the mobile station UE is "NULL."

When "DL_1st_TX_TF" of the mobile station UE is "NULL," "OK" is returned, and otherwise "NG" is returned.

When the result of "1st TX TF NULL Check" is "OK," the processing proceeds to "Temporary 1st TX TF Selection (initial)" in Step S612. On the other hand, when the result of "1st TX TF NULL Check" is "NG," the processing proceeds to "Temporary 1st TX TF Selection" in Step S609.

Incidentally, "DL_1st_TX_TF" of the mobile station UE is a variable indicating a state of the downlink radio resources allocated to the mobile station UE by "Persistent scheduling." ""DL_1st_TX_TF" of the mobile station UE is "NULL"" means that the mobile station UE has no downlink radio resources allocated thereto by "Persistent scheduling."

When the processing of Step S608 has determined that the mobile station UE has no downlink radio resources allocated thereto by "Persistent scheduling," the processing proceeds to Steps S612 to S615 to perform processing of newly allocating downlink radio resources by "Persistent scheduling."

On the other hand, when the processing of Step S608 has determined that the mobile station UE has downlink radio resources allocated thereto by "Persistent scheduling," the processing proceeds to processing (Steps S609, S609A, S610 and S611) for determining whether or not the downlink radio resources already allocated to the mobile station UE by "Persistent scheduling" should be changed.

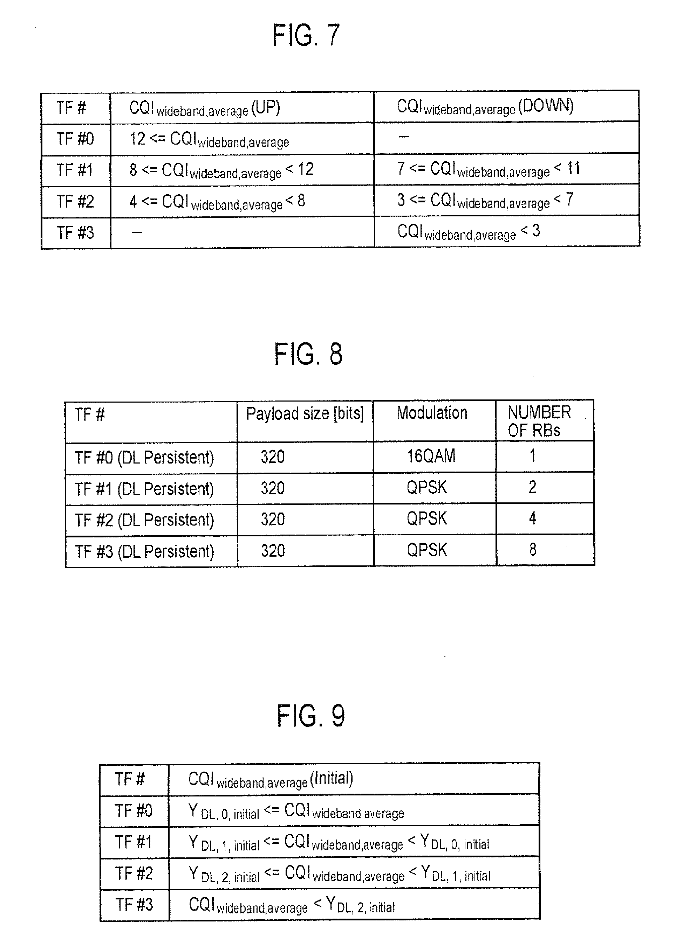

In Step S609 (Temporary 1st TX TF Selection), an optimum transmission format (TF) is selected based on the time average value "CQI$_{wideband, average}$" of CQI over the system bandwidth, which is calculated in Step S603, and a "Persistent DL TFR table" shown in Fig. 7, and then the optimum transmission format is set to be "Temporary_DL_1st_TX_TF."

Note that, in this processing, CQI$_{adjusted}$ may be used instead of "CQI$_{wideband, average}$." In this case, a table obtained by replacing "CQI$_{wideband, average}$" shown in Fig. 7 with "CQI$_{adjusted}$" may be used.

In this event, when the transmission format is shifted to that smaller than the current transmission format (DL_1st_TX_TF), a threshold of "CQI$_{wideband, average}$ (UP)" is used. On the other hand, when the transmission format is shifted to that larger than the current transmission format (DL_1st_TX_TF), a threshold of "CQI$_{wideband, average}$ (DOWN)" is used.

Here, with reference to Fig. 8, an example of each transmission format (TF) is described. As shown in Fig. 8, the transmission format is determined by a data size (payload size), a modulation scheme (Modulation), and the number of resource blocks (number of RBs).

The smaller the index (#) of the TF, the smaller the number of RBs and the larger the number of multiple values in the modulation scheme. Thus, the TF with a smaller index is used when the mobile station UE has better downlink radio quality.

Now, a description is given of the effect of having the two kinds of thresholds, i.e., the threshold of "CQI$_{wideband, average}$ (UP)" and the threshold Of "CQI$_{wideband, average}$ (DOWN)" in the "Persistent DL TFR table" shown in Fig. 7.

For example, when the current transmission format is "TF#2," the CQI value needs to be "8" or more when shifting to "TF#1."

On the other hand, when the current transmission format is "TF#1," the CQI value needs to be less than "7" when shifting to "TF#2."

In this case, for example, it is assumed that since the CQI value has become "8" when the current transmission format is "TF#2," the transmission format is shifted from "TF#2" to "TF#1." After that, when the transmission format is shifted from "TF#1" back to "TF#2," the CQI value needs to be reduced to "6" or less. This makes the transmission format less likely to be easily shifted back to "TF#2."

That is, the threshold shifting from "TF#2" to "TF#1" and the threshold shifting from "TF#1" to "TF#2" are allowed to have a difference therebetween. Thereby, a ping-pong between the transmission formats "TF#2" and "TF#1" can be suppressed.

Note that "providing the two kinds of thresholds depending on the transition direction" as described above may be expressed as "allowing the threshold to have a hysteresis."

After "Temporary 1st TX TF Selection" in Step S609, the processing proceeds to "Updating TTT, Timer$_{reconf}$" in Step S610.

In "Updating TTT, Timer$_{reconf}$" in Step S609A, "TTT$_{DL, persistent, Down}$," "TTT$_{DL, persistent, Up}$" and "Timer$_{DL, reconf}$" are updated by the following processing.

```
If (DL_1st_TX_TF>Temporary_DL_1st_TX_TF
){
TTTDL, persistent, Down+= 1
```

$TTT_{DL, persistent, Up} = 0$
$Timer_{DL, reconf} += 1$
}
else if (DL_1st_TX_TF<Temporary_DL_1st
_TX_TF){
$TTT_{DL, persistent, Up} += 1$
$TTT_{DL, persistent, Down} = 0$
$Timer_{DL, reconf} += 1$
}
else {
$TTT_{DL, persistent, Down} = 0$
$TTT_{DL, persistent, Up} = 0$
$Timer_{DL, reconf} += 1$
}

After "Updating TTT, Timer$_{reconf}$" in Step S609A, the processing proceeds to "TTT$_{persistent}$ Check" in Step S610.

In "TTT$_{persistent}$ Check" in Step S610, a determination is made on the mobile station UE regarding whether or not "TTT$_{DL, persistent, Down}$" is not less than "Th$_{DLTTT}$" or "TTT$_{DL, persistent, Up}$" is not less than "Th$_{DLTTT}$."

When "TTT$_{DL, persistent, Down}$" is not less than "Th$_{DLTTT}$" or "TTT$_{DL, persistent, Up}$" is not less than "TH$_{DLTTT}$," "OK" is returned, and otherwise "NG" is returned.

When the result of "TTT$_{persistent}$ Check" is "OK," the processing proceeds to "Persistent Sub-frame Selection" in Step S613. On the other hand, when the result of "TTT persistent Check" is "NG," the processing proceeds to "Persistent Sub-frame Reconfiguration Check" in Step S611.

Here, the effect of the control by the processing in Steps S609A and S610 is described.

"TTT$_{DL, persistent, Down}$" in Steps S609A and S610 is a timer for determining that, when "Temporary_DL_1st_TX_TF" that is the optimum transmission format (TF) is smaller than the current transmission format (DL_1st_TX_TF), the transmission format is shifted from the current transmission format (DL_1st_TX_TF) to "Temporary_DL_1st_TX_TF" that is the optimum transmission format (TF).

For example, when the threshold "TH$_{DL, TTT}$" for "TTTT$_{DL, persistent, Down}$" in Step S610 is set to "200 ms," the result of "TTT$_{DL, persistent}$ Check" in Step S610 is "OK" when the state where "Temporary_DL_1st_TX_TF" that is the optimum transmission format (TF) is smaller than the current transmission format (DL_1st_TX_TF) exceeds "200 ms." Then, processing of changing the downlink radio resources allocated by "Persistent scheduling" is performed in Steps S613 to S615.

Here, when the state where "Temporary_DL_1st_TX_TF" that is the optimum transmission format (TF) is smaller than the current transmission format (DL_1st_TX_TF) is not maintained for 200 ms, processing of establishing "TTT$_{DL, persistent, Down}$= 0" is performed in Step S609A. This means that the timer "TTT$_{DL, persistent, Down}$" is reset.

As described above, when the state where "Temporary_DL_1st_TX_TF" that is the optimum transmission format (TF) is smaller than the current transmission format (DL_1st_TX_TF) is maintained for the predetermined threshold "Th$_{DL, TTT}$," the processing of changing the transmission format is performed. This makes it possible to reduce a situation where the processing of changing the transmission format is frequently performed.

Note that description of "TTT$_{DL, persistent, Up}$" in Steps S609A and S610 is approximately the same as that of "TTT$_{DL, persistent, Down}$," and thus is omitted.

In "Persistent Sub-frame Reconfiguration Check" in Step S611, a determination is made on the mobile station UE regarding whether or not "Timer$_{DL, reconf}$" is not less than "Th$_{DL, reconf}$."

When "Timer$_{DL, reconf}$" is not less than "Th$_{DL, reconf}$," "OK" is returned, and otherwise "NG" is returned.

When the result of "Persistent Sub-frame Reconfiguration Check" is "OK," the processing proceeds to "Persistent Sub-frame Selection" in Step S613. On the other hand, when the result of "Persistent Sub-frame Reconfiguration Check" is "NG," the processing proceeds to "n++" in Step S616.

Here, the effect of the control by the processing in Step S611 is described.

In Step S611, when downlink data transmission is continuously performed for a predetermined time interval "Timer$_{DL, reconf}$" using the same downlink radio resources allocated by "Persistent scheduling," the downlink radio resources are changed.

This is intended to bring the state shown in Fig. 10A as close as possible to the state shown in Fig. 10B.

For example, the easiest method for changing from the state shown in Fig. 10A to the state shown in Fig. 10B is to change the downlink radio resources allocated to all the mobile stations UE in the state shown in Fig. 10A through the "PDCCH" by "Persistent scheduling."

However, the processing as described above consumes a large amount of radio resources of the "PDCCH," resulting in a reduction in the radio resources of the "PDCCH." This is against the concept of "Persistent scheduling."

The control of bringing the state shown in Fig. 10A close to the state shown in Fig. 10B in a more efficient manner with a smaller number of "PDCCHs" requires advanced and complex algorithms.

Meanwhile, when the processing of Step S611 is performed, processing of changing, with a proper time interval (Timer$_{DL, reconf}$), the downlink radio resources allocated to all the mobile stations by "Persistent scheduling" is applied. Accordingly, the state shown in Fig. 10A can be brought close to the state shown in Fig. 10B up to an appropriate level with an appropriate number of "PDCCHs" and simple processing.

Note that, although this processing is performed for all the mobile stations, start-up time of the "Timer$_{DL, reconf}$" varies among the mobile stations UE. As a result, the timing of changing the downlink radio resources allocated by "Persistent scheduling" is dispersed by the "Timer$_{DL, reconf}$." This prevents a problem that the radio resources of the "PDCCH" are consumed in large amounts at one time.

In "Temporary 1$^{st}$ TX TF Selection (initial)" in Step S612, an optimum transport format (TF) is selected based on the time average value "CQI$_{wideband, average}$" of CQI over the system bandwidth and a "Persistent DL TFR table (initial)" shown in Fig. 9, and then the optimum transmission format is set to be "Temporary_DL_1$^{st}$_TX_TF."

Note that, in this processing, CQI$_{adjusted}$ may be used instead of "CQI$_{wideband, average}$." In this case, a table obtained by replacing "CQI$_{wideband, average}$" shown in Fig. 7 with "CQI$_{adjusted}$" may be used.

Also, "TTT$_{DL, persistent, Up}$= 0," "TTT$_{DL, persistent, Down}$= 0" and "Timer$_{DL, reconf}$= 0" are established.

Note that the transmission format is, for example, any of those shown in Fig. 8.

After Step S612, the processing proceeds to Step S613.

In "Persistent Sub-frame Selection" in Step S613, a "Persistent Sub-frame (DL_1$^{st}$_TX_Persistent_Subframe)" for initial transmission of "DL-SCH" to which "Persistent scheduling" is applied is determined for the mobile station UE.

The "Persistent Sub-frame (DL_1$^{st}$_TX_Persistent_Subframe)" for initial transmission of "DL-SCH" to which "Persistent scheduling" is applied means a downlink radio resource allocation start moment.

Out of the "Persistent Sub-frames," a "Persistent Sub-frame which is the DRX reception timing of the mobile station UE and has the smallest value of resource use amount "DL_Resource (m)"" is selected as a "Candidate_Sub-frame" of the mobile station UE.

Here, the resource use amount DL_Resource (m) may include radio resources allocated for initial transmission of the DL-SCH to which Persistent scheduling is applied in the loop processing including Steps S601, S616 and S617.

That is, in the processing for the m-th mobile station UE, for the mobile stations m=1, 2, ..., and m-1, radio resources allocated by the processing in Steps S613 and S614 for initial transmission of the DL-SCH to which Persistent scheduling is applied may be considered as the DL_Resource (m).

When there is more than one "Persistent Sub-frame which is the DRX reception timing of the mobile station UE and has the smallest value of resource use amount DL_Resource (m)," a "Persistent Sub-frame" with the smallest "Persistent Sub-frame number" may be selected as the "Candidate_Subframe" of the mobile station UE. Here, variable values are changed by the following processing.

OLD_DL_1$^{st}$_TX_Persistent_Subframe=DL_1$^{st}$_TX_Persi stent_Subframe

DL_1$^{st}$_TX_Persistent_Subframe=Candidate_Subframe

More specifically, in Step S613, processing is performed, wherein a sub-frame having a small resource use amount is allocated as the downlink radio resource allocation start moment for the mobile station UE to which downlink radio resources are allocated by "Persistent scheduling."

This processing reduces collision with other signals and thus enables efficient communications since transmission of data to which radio resources are allocated by "Persistent scheduling" is performed in the sub-frame having a small use amount of downlink radio resources.

Moreover, the processing of allocating the sub-frame having a small use amount of downlink radio resources to each mobile station UE makes it possible to equally allocate the downlink radio resources among the "Persistent Sub-frames," and to efficiently allocate the radio resources.

Note that, in the above processing, the Candidate_Sub-frame may be selected so that the timing of receiving acknowledgement information to the "DL-SCH" to which "Persistent scheduling" is applied is different from the timing of receiving an uplink control signal or an uplink sounding reference signal.

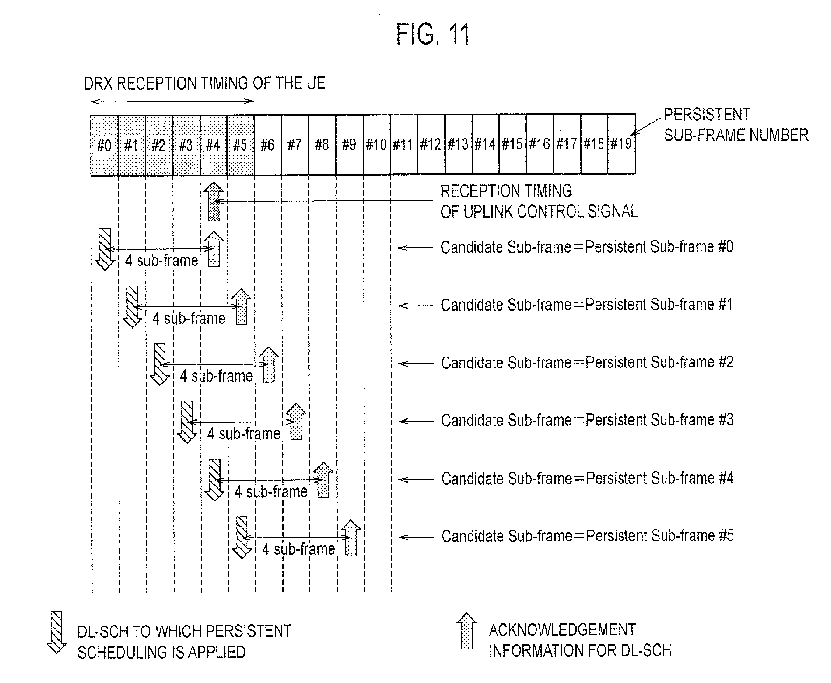

A more detailed description is given with reference to Fig. 11.

In the example shown in Fig. 11, Persistent Sub-frames #0 to #5, out of Persistent Sub-frames #0 to #19, are defined as the DRX reception timing of the mobile station UE. Note that, for convenience of explanation, uplink sub-frames and downlink sub-frames are considered to correspond to each other.

Moreover, in the example shown in Fig. 11, radio resources for the mobile station UE to transmit an uplink control signal or an uplink sounding reference signal are allocated to the Persistent Sub-frame #4. That is, from the viewpoint of the mobile station UE, the Persistent Sub-frame #4 is the timing of transmitting the uplink control signal or the uplink sounding reference signal. On the other hand, from the viewpoint of the radio base station eNB, the Persistent Sub-frame #4 is the timing of receiving the uplink control signal or the uplink sounding reference signal transmitted from the mobile station UE.

Here, the uplink control signal may be, for example, downlink radio quality information CQI (channel quality indicator) or a scheduling request (SR). That is, the mobile station UE transmits CQI or SR to the radio base station eNB in the Persistent Sub-frame #4.

The selection of "Candidate_Sub-frame" described above is performed based on the reception timing of the uplink control signal or the uplink sounding reference signal. For example, in the example shown in Fig. 11, the DRX reception timing of the mobile station UE is #0 to #5, and the Persistent Sub-frame selectable as the Candidate Sub-frame is as follows.

- Persistent Sub-frame #0 (reception timing of the acknowledgement information to the DL-SCH is Persistent Sub-frame #4)
- Persistent Sub-frame #1 (reception timing of the acknowledgement information to the DL-SCH is Persistent Sub-frame #5)
- Persistent Sub-frame #2 (reception timing of the acknowledgement information to the DL-SCH is Persistent Sub-frame #6)
- Persistent Sub-frame #3 (reception timing of the acknowledgement information to the DL-SCH is Persistent Sub-frame #7)
- Persistent Sub-frame #4 (reception timing of the acknowledgement information to the DL-SCH is Persistent Sub-frame #8)
- Persistent Sub-frame #5 (reception timing of the acknowledgement information to the DL-SCH is Persistent Sub-frame #9)

In the Persistent Sub-frame #0 among the six Persistent Sub-frames selectable as the Candidate Sub-frame, reception timing (when seen from the radio base station) of corresponding acknowledgement information coincides with the reception timing of the uplink control signal or the uplink sounding reference signal.

Here, the "Candidate_Sub-frame" of the mobile station UE may be allocated, for example, so that the reception timing of corresponding acknowledgement information does not coincide with the reception timing of the uplink control signal or the uplink sounding reference signal.

In the example shown in Fig. 11, any of the Persistent Sub-frames other than the Persistent Sub-frame #0 may be allocated as the Candidate Sub-frame.

Alternatively, for example, a "Persistent Sub-frame which is the DRX reception timing of the mobile station UE, which has the smallest value of resource use amount DL_Resource (m), and in which the reception timing of corresponding acknowledgement information does not coincide with the reception timing of the uplink control signal or the uplink sounding reference signal" may be selected as the "Candidate_Sub-frame" of the mobile station UE.

The following shows the effect of selecting the Candidate_Sub-frame so that the reception timing of corresponding acknowledgement information does not coincide with the reception timing of the uplink control signal or the uplink sounding reference signal.

When the reception timing of corresponding acknowledgement information coincides with the reception timing of the uplink control signal or the uplink sounding reference signal, the acknowledgement information is transmitted after being multiplexed with the uplink control signal or the uplink sounding reference signal. This may deteriorate transmission characteristics.

To be more specific, when the acknowledgement information is multiplexed with the uplink control signal or the uplink sounding reference signal, an amount of information to be transmitted is increased, resulting in an increase in required signal power.

In this case, when the Persistent Sub-frame #0 is selected as the Candidate_Sub-frame, the acknowledgement information or the uplink control signal is less likely to be normally transmitted in an area with poor radio quality, such as a cell edge.

In other words, the deterioration in the transmission characteristics described above can be reduced by selecting the Candidate_Sub-frame in such a way that the reception timing of corresponding acknowledgement information does not coincide with the reception timing of the uplink control signal or the uplink sounding reference signal.

Alternatively, in the above processing, the Candidate_Sub-frame may be selected so that the timing of receiving acknowledgement information to the "DL-SCH" to which "Persistent scheduling" is applied differs from the timing of receiving the UL-SCH to which Persistent scheduling is applied in the uplink.

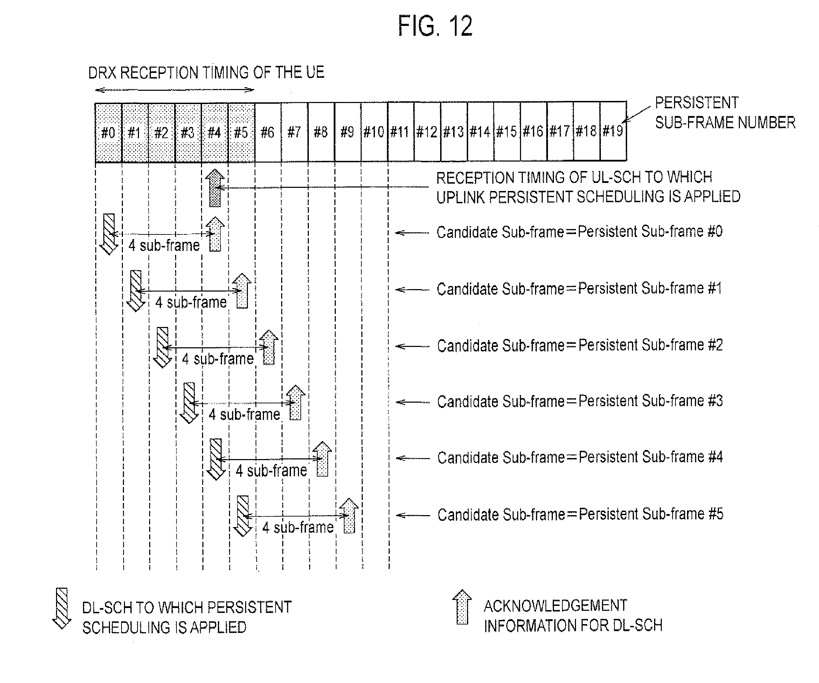

A more detailed description is given with reference to Fig. 12.

In the example shown in Fig. 12, Persistent Sub-frames #0 to #5, out of Persistent Sub-frames #0 to #19, are defined as the DRX reception timing of the mobile station UE. Note that, for convenience of explanation, uplink sub-frames and downlink sub-frames are considered to correspond to each other.

Moreover, in the example shown in Fig. 12, uplink radio resources allocated to the mobile station UE by Persistent scheduling are allocated to the Persistent Sub-frame #4.

That is, from the viewpoint of the mobile station UE, the Persistent Sub-frame #4 is the timing of transmitting the uplink data signal (UL-SCH) to which Persistent scheduling is applied. On the other hand, from the viewpoint of the radio base station eNB, the Persistent Sub-frame #4 is the timing of receiving the uplink data signal (UL-SCH) to which Persistent scheduling is applied, the uplink data signal (UL-SCH) transmitted from the mobile station UE.

Then, the selection of "Candidate_Sub-frame" described above is performed based on the reception timing of the uplink data signal (UL-SCH) to which Persistent scheduling is applied.

For example, in the example shown in Fig. 12, the DRX reception timing of the mobile station UE is #0 to #5, and the Persistent Sub-frame selectable as the Candidate Sub-frame is as follows.

- Persistent Sub-frame #0 (reception timing of the acknowledgement information to the DL-SCH is Persistent Sub-frame #4)
- Persistent Sub-frame #1 (reception timing of the acknowledgement information to the DL-SCH is Persistent Sub-frame #5)
- Persistent Sub-frame #2 (reception timing of the acknowledgement information to the DL-SCH is Persistent Sub-frame #6)
- Persistent Sub-frame #3 (reception timing of the acknowledgement information to the DL-SCH is Persistent Sub-frame #7)
- Persistent Sub-frame #4 (reception timing of the acknowledgement information to the DL-SCH is Persistent Sub-frame #8)
- Persistent Sub-frame #5 (reception timing of the acknowledgement information to the DL-SCH is Persistent Sub-frame #9)

In the Persistent Sub-frame #0 among the six Persistent Sub-frames selectable as the Candidate Sub-frame, reception timing (when seen from the radio base station) of corresponding acknowledgement information coincides with the uplink data signal (UL-SCH) to which Persistent scheduling is applied.

Here, the "Candidate_Sub-frame" of the mobile station UE may be allocated, for example, so that the reception timing of corresponding acknowledgement information does not coincide with the reception timing of the uplink data signal (UL-SCH) to which Persistent scheduling is applied.

In the example shown in Fig. 12, any of the Persistent Sub-frames other than the Persistent Sub-frame #0 may be allocated as the Candidate Sub-frame.

Alternatively, for example, a "Persistent Sub-frame which is the DRX reception timing of the mobile station UE, which has the smallest value of resource use amount DL_Resource (m), and in which the reception timing of corresponding acknowledgement information does not coincide with the reception timing of the uplink data signal (UL-SCH) to which Persistent scheduling is applied" may be selected as the "Candidate_Sub-frame" of the mobile station UE.

The following shows the effect of selecting the Candidate_Sub-frame so that the reception timing of corresponding acknowledgement information does not coincide with the reception timing of the uplink data signal (UL-SCH) to which Persistent scheduling is applied.

When the reception timing of corresponding acknowledgement information coincides with the reception timing of the uplink data signal (UL-SCH) to which Persistent scheduling is applied, the acknowledgement information is transmitted after being multiplexed with the uplink data signal (UL-SCH) to which Persistent scheduling is applied. This may deteriorate transmission characteristics.

To be more specific, when the acknowledgement information is multiplexed with the uplink data signal (UL-SCH) to which Persistent scheduling is applied, an amount of information to be transmitted is increased, resulting in an increase in required signal power.

In this case, when the Persistent Sub-frame #0 is selected as the Candidate_Sub-frame, the acknowledgement information or the data signal (UL-SCH) to which Persistent scheduling is applied is less likely to be normally transmitted in an area with poor radio quality, such as a cell edge.

In other words, the deterioration in the transmission characteristics described above can be reduced by selecting the Candidate_Sub-frame in such a way that the reception timing of corresponding acknowledgement information does not coincide with the reception timing of the uplink data signal (UL-SCH) to which Persistent scheduling is applied.

Alternatively, in the above processing, the Candidate_Sub-frame may be selected from other than Sub-frames without any ACK/NACK PUCCH resource index available by a "TPC command for PUCCH" in the DL scheduling information.

Note that the "available ACK/NACK PUCCH resource index" means a "PUCCH resource index not used by the other UEs."

When there is no ACK/NACK PUCCH resource index available, the processing of Steps S613 and S614 may be skipped.

To be more specific, the radio base station eNB may select a "Persistent Sub-frame which is the DRX reception timing of the mobile station UE, can specify an available ACK/NACK PUCCH resource index by the "TPC command for PUCCH" in the DL scheduling information, and has the smallest value of resource use amount DL_Resource (m)," as the "Candidate_Sub-frame" of the mobile station UE.

Note that, in the above example, the TPC command for PUCCH in the downlink scheduling information is used as bits for specifying radio resources of ACK/NACK. Alternatively, information elements other than the TPC command for PUCCH may be used as bits for specifying the radio resources of ACK/NACK.

When the available ACK/NACK resource, i.e., PUCCH resource index cannot be specified by the TPC command for PUCCH in the downlink scheduling information, the mobile station UE cannot transmit the acknowledgement information in the uplink.

Alternatively, when ACK/NACK is transmitted using the radio resources used by the other mobile stations UE, transmission characteristics of the ACK/NACK are significantly deteriorated.

Accordingly, as described above, the deterioration in the transmission characteristics can be avoided by allocating radio resources for initial transmission of the DL-SCH to which Persistent scheduling is applied, only when the available ACK/NACK PUCCH resource index can be specified by the "TPC command for PUCCH" in the DL scheduling information.

After Step S613, the processing proceeds to Step S614.

In "Persistent RB Selection" in Step S614, a "Resource block (hereinafter referred to as DL_1st_TX_Persistent_RB)" for initial transmission of "DL_SCH" to which "Persistent scheduling" is applied is determined for the mobile station UE.

For allocation of a transmission band of "DL-SCH" to which "Persistent scheduling" is applied, "Resource allocation type 2" described in Non-patent Document 3 (TS36.213), for example, may be used.

Alternatively, "Resource allocation type 1" or "Resource allocation type 0" may be used instead of "Resource allocation type 2." The following description is based on the assumption that "Resource allocation type 2" is used.

As described below, based on the determination results in Steps S608, S610 and S611, processing of allocating a "Resource block" for initial transmission of "DL-SCH" to which "Persistent scheduling" is applied is performed.

A description is given below of an operation when the determination result in Step S608 is "OK."

"Allocatable resource block s (RB) having the smallest "Virtual Resource Block (VRB) index" when "Temporary_DL_1st_TX_TF" is transmitted in the "DL_1st_TX_Persistent_Subframe" of the mobile station UE," is selected as a "Candidate_RB."

The "Virtual Resource Block index" is a virtual resource block index in "Resource allocation type 2."

Specifically, it is determined to notify the mobile station UE of the initial transmission resources for "Persistent scheduling" using the "downlink scheduling information" in the "DL_1st_TX_Persistent_Subframe" of the mobile station UE. In other words, a persistent allocation signal is transmitted to the mobile station UE.

However, when the "downlink scheduling information" is not transmitted after all to the mobile station UE in the "DL_1st_TX_Persistent_Subframe" of the mobile station UE, the resource blocks allocated to the mobile station UE by "Persistent scheduling" are released.

Next, a description is given for an operation when the determination result in Step S610 is "OK."

"Allocatable RB having the smallest "Virtual Resource Block (VRB) index" when "Temporary_DL_1st_TX_TF" is transmitted in the "DL_1st_TX_Persistent_Subframe" of the mobile station UE" is selected as a "Candidate_RB."

Then, the "Candidate_RB" is set to be the resource block to be allocated by "Persistent scheduling."

Specifically, it is determined to notify the mobile station UE of the initial transmission resources for "Persistent scheduling" using the "downlink scheduling information" in the "DL_1st_TX_Persistent_Subframe" of the mobile station UE. In other words, a persistent allocation signal is transmitted to the mobile station UE.

However, when the "downlink scheduling information" is not transmitted after all to the mobile station UE in the "DL_1st_TX_Persistent_Subframe" of the mobile station UE, the resource blocks allocated to the mobile station UE by "Persistent scheduling" are released.

In this case, the radio resources for initial transmission of the DL-SCH to which Persistent scheduling is applied for the mobile station UE are set back to the state before the above processing of Steps S613 and S614.

Here, the "case where "downlink scheduling information" is not transmitted after all to the mobile station UE in the "DL_1st_TX_Persistent_Subframe" of the mobile station UE" is, for example, the case where the "downlink scheduling information" is not transmitted due to running out of the radio resources of the "PDCCH."

Next, a description is given of an operation when the determination result in Step S611 is "OK."

"Allocatable RBs having the smallest "Virtual Resource Block (VRB) index" when "DL_1st_TX_TF" is transmitted in the "DL_1st_TX_Persistent_Subframe" of the mobile station UE" is selected as a "Candidate_RB."

Then, the "Candidate_RB" is set to be the resource block to be allocated by "Persistent scheduling."

Note, however, that the above processing is not performed, in other words, processing of changing the downlink radio resource is not performed when the "allocatable RB having the smallest "Virtual Resource Block (VRB) index"" is the same as the currently allocated downlink radio resource in a case where the above ""DL_1st_TX_TF is transmitted."

Then, it is determined to notify the mobile station UE of the initial transmission resources for "Persistent scheduling" using the "downlink scheduling information" in the "DL_1st_TX_Persistent_Subframe" of the mobile station UE.

However, when the "downlink scheduling information" is not transmitted after all to the mobile station UE in the "DL_1st_TX_Persistent_Subframe" of the mobile station UE, the resource blocks allocated to the mobile station UE by "Persistent scheduling" are released.

In this case, the radio resources for initial transmission of the DL-SCH to which Persistent scheduling is applied for the mobile station UE are set back to the state before the above processing of Steps S613 and S614.

Here, the "case where "downlink scheduling information" is not transmitted after all to the mobile station UE in the "DL_1st_TX_Persistent_Subframe" of the mobile station UE" is, for example, the case where the "downlink scheduling information" is not transmitted due to running out of the radio resources of the "PDCCH."

The processing in Step S614 determines frequency resources (resource blocks) of the downlink radio resources to which "Persistent scheduling" is applied.

Here, the allocatable RB having the smallest "Virtual Resource Block (VRB) index" may be allocated to the downlink radio resources to which "Persistent scheduling" is applied. Meanwhile, an allocatable RB having the largest "Virtual Resource Block (VRB) index" may be allocated to the common channel such as the "PCH," "RACH response" or "D-BCH."

In this case, the downlink radio resources to which "Persistent scheduling" is applied and the radio resources of the common channel such as the "PCH," "RACH response" or "D-BCH" can be prevented from colliding with each other, thereby enabling efficient radio resource allocation.

After Step S614, the processing proceeds to Step S615.

In Step S615, transmission power of the downlink radio resource (PDSCH) to which "Persistent scheduling" is applied is determined. The transmission power may be calculated based on the CQI or may be a fixed value.

A description is given below of acknowledgement information reception processing by the acknowledgement information reception processor unit 15.

The acknowledgement information reception processor unit 15 receives acknowledgement information with respect to the downlink radio resource (PDSCH) to which "Persistent scheduling" is applied, the acknowledgement information being transmitted from each mobile station UE.

Here, when receiving the acknowledgement information, the acknowledgement information reception processor unit 15 may determine three values, namely, "ACK," "NACK" and "DTX," or may determine two values, namely, "ACK" and "NACK."

A description is given below of state mismatch detection processing by the state mismatch detection processor unit 16.

The state mismatch detection processor unit 16 detects a state mismatch between the radio base station eNB and the mobile station UE.

Here, the "state mismatch" means, for example, a state where the radio base station eNB has performed the downlink radio resource allocation by "Persistent scheduling" to the mobile station UE, but the mobile station UE is not aware that the downlink radio resource allocation has been performed.

For example, the radio base station eNB sets "DL_1st_TX_TF" of the mobile station UE to "NULL" when at least one of the following events occurs.

When acknowledgement information in response to initial transmission of "DL-SCH" to which "Persistent scheduling" is applied is "DTX."

Note that the "initial transmission" includes only the case where SPS transmission is instructed by the downlink scheduling information, and does not include the case where SPS transmission is not instructed by the downlink scheduling information.

When acknowledgement information in response to initial transmission of "DL-SCH" to which "Persistent scheduling," is applied is DTX or NACK for $N_{DL, 1stErr}$ times in a row.

Note that the "initial transmission" includes both cases where SPS transmission is instructed and not instructed by the downlink scheduling information.

When "DL_1st_TX_TF" is set to "NULL," the determination result in Step S608 is "OK." Accordingly, the downlink radio resources allocated by "Persistent scheduling" are reallocated. Thus, the state mismatch between the radio base station eNB and the mobile station UE can be resolved.

With the mobile communication system according to the present embodiment, it is possible to provide a radio base station and a communication control method, which are capable of realizing a highly efficient mobile communication system by setting downlink radio resources to be allocated by "Persistent scheduling" so as to maximize a statistical multiplexing effect.

In addition, with the mobile communication system according to the present embodiment, it is possible to provide a radio base station and a communication control method, which are capable of realizing a highly efficient mobile communication system by properly setting downlink radio resources to be allocated by "Persistent scheduling."

(modified)

Note that operation of the above described mobile station UE and the radio base station may be implemented by means of hardware, a software module executed by a processor, or a combination of both.

The software module may be provided in any type of storage medium such as an RAM (Random Access Memory), a flash memory, a ROM (Read Only Memory), an EPROM (Erasable Programmable ROM), an EEPROM (Electronically Erasable and Programmable ROM), a register, a hard disk, a removable disk, or a CD-ROM.

The storage medium is connected to the processor so that the processor can read and write information from and to the storage medium. Also, the storage medium may be integrated into the processor. Also, the storage medium and the processor may be provided in an ASIC. The ASIC may be provided in mobile station UE and the radio base station. Also, the storage medium and the processor may be provided in mobile station UE and the radio base station as a discrete component.

Hereinabove, the present invention has been described in detail using the above embodiment; however, it is apparent to those skilled in the art that the present invention is not limited to the embodiment described herein. Modifications and variations of the present invention can be made without departing from the spirit and scope of the present invention defined by the description of the scope of claims. Thus, what is described herein is for illustrative purpose, and has no intention whatsoever to limit the present invention.

**Claims**

1. A radio base station configured to transmit downlink data to a mobile station by using a downlink radio resource persistently allocated with a predetermined period at and after a downlink radio resource allocation start moment, the radio base station comprising:

   a measurement unit configured to measure a resource use amount in each time frame within the predetermined period;
   a downlink persistent allocation signal transmitter configured to transmit a persistent allocation signal indicating the downlink radio resource allocation start moment to the mobile station; and
   a downlink communication unit configured to transmit the downlink data using the downlink radio resource allocated at and after the downlink radio resource allocation start moment, wherein
   the downlink persistent allocation signal transmitter determines the downlink radio resource allocation start moment based on the resource use amount of each time frame.

2. The radio base station according to claim 1, further comprising:

   a setting unit configured to set a on-duration in discontinuous reception control for the mobile station, based on the resource use amount in each time frame within the predetermined period, wherein
   the downlink persistent allocation signal transmitter determines the downlink radio resource allocation start moment so that the downlink radio resource allocation start moment is included in the on-duration of the discontinuous reception control.

3. The radio base station according to claim 1, wherein
   the downlink persistent allocation signal transmitter determines the downlink radio resource allocation start moment so that a time frame having the smallest resource use amount serves as the downlink radio resource allocation start moment.

4. The radio base station according to claim 2, wherein
   the downlink persistent allocation signal transmitter determines the downlink radio resource allocation start moment so that a time frame having the smallest resource use amount serves as the downlink radio resource allocation start moment.

5. The radio base station according to claim 2, wherein
   the setting unit sets the on duration of the discontinuous reception control so that an equal resource use amount is used in the time frames.

6. The radio base station according to claim 2, wherein
the setting unit sets the on duration of the discontinuous reception control so as to minimize the sum of the resource use amounts of the time frames within the on duration of the discontinuous reception control.

7. The radio base station according to claim 1, wherein
the downlink persistent allocation signal transmitter determines the downlink radio resource allocation start moment so that the timing of receiving acknowledgement information for the downlink data does not coincide with the timing of receiving at least one of an uplink control signal and an uplink sounding reference signal.

8. The radio base station according to claim 2, wherein
the downlink persistent allocation signal transmitter determines the downlink radio resource allocation start moment so that the timing of receiving acknowledgement information for the downlink data does not coincide with the timing of receiving at least one of an uplink control signal and an uplink sounding reference signal.

9. The radio base station according to claim 3, wherein
the downlink persistent allocation signal transmitter determines the downlink radio resource allocation start moment so that the timing of receiving acknowledgement information for the downlink data does not coincide with the timing of receiving at least one of an uplink control signal and an uplink sounding reference signal.

10. The radio base station according to claim 1, wherein
the downlink persistent allocation signal transmitter determines the downlink radio resource allocation start moment so that an available radio resource for acknowledgement information can be specified by the persistent allocation signal.

11. The radio base station according to claim 2, wherein
the downlink persistent allocation signal transmitter determines the downlink radio resource allocation start moment so that an available radio resource for acknowledgement information can be specified by the persistent allocation signal.

12. The radio base station according to claim 3, wherein
the downlink persistent allocation signal transmitter determines the downlink radio resource allocation start moment so that an available radio resource for acknowledgement information can be specified by the persistent allocation signal.

13. The radio base station according to claim 1, further comprising:

an uplink persistent allocation signal transmitter configured to transmit a persistent allocation signal indicating an uplink radio resource allocation start moment to the mobile station; and
an uplink communication unit configured to receive uplink data by using an uplink radio resource allocated at and after the uplink radio resource allocation start moment, wherein
the downlink persistent allocation signal transmitter determines the downlink radio resource allocation start moment so that the timing of receiving acknowledgement information for the downlink data does not coincide with the timing of receiving the uplink data.

14. The radio base station according to claim 2, further comprising:

an uplink persistent allocation signal transmitter configured to transmit a persistent allocation signal indicating an uplink radio resource allocation start moment to the mobile station; and
an uplink communication unit configured to receive uplink data by using an uplink radio resource allocated at and after the uplink radio resource allocation start moment, wherein
the downlink persistent allocation signal transmitter determines the downlink radio resource allocation start moment so that the timing of receiving acknowledgement information for the downlink data does not coincide with the timing of receiving the uplink data.

15. The radio base station according to claim 3, further comprising:

an uplink persistent allocation signal transmitter configured to transmit a persistent allocation signal indicating an uplink radio resource allocation start moment to the mobile station; and

an uplink communication unit configured to receive uplink data by using an uplink radio resource allocated at and after the uplink radio resource allocation start moment, wherein

the downlink persistent allocation signal transmitter determines the downlink radio resource allocation start moment so that the timing of receiving acknowledgement information for the downlink data does not coincide with the timing of receiving the uplink data.

16. The radio base station according to claim 1, wherein
the measurement unit measures the resource use amount based on at least one of a resource allocated to broadcast channels, a resource allocated to synchronization signals, a resource allocated to dynamic broadcast channels, a resource allocated to paging channels, a resource allocated to random access response channels, a resource allocated to MBMS channels, and the downlink radio resources allocated to all the mobile stations in a cell.

17. A communication control method by which a radio base station transmits downlink data a mobile station by using a downlink radio resource persistently allocated with a predetermined period at and after the downlink radio resource allocation start moment, the method comprising:

a step A of measuring, by the radio base station, a resource use amount in each time frame within the predetermined period;
a step B of transmitting a persistent allocation signal indicating the downlink radio resource allocation start moment from the radio base station to the mobile station; and
a step C of transmitting the downlink data from the radio base station by using the downlink radio resource allocated at and after the downlink radio resource allocation start moment, wherein
in the step B, the radio base station determines the downlink radio resource allocation start moment based on the resource use amount of each time frame.

18. A radio base station configured to transmit downlink data to a mobile station by using a downlink radio resource persistently allocated with a predetermined period at and after a downlink radio resource allocation start moment, the radio base station comprising:

a downlink persistent allocation signal transmitter configured to transmit a persistent allocation signal indicating the downlink radio resource allocation start moment to the mobile station; and
a downlink communication unit configured to transmit the downlink data using the downlink radio resource allocated at and after the downlink radio resource allocation start moment, wherein
the downlink persistent allocation signal transmitter determines the downlink radio resource allocation start moment so that the timing of receiving acknowledgement information for the downlink data does not coincide with the timing of receiving at least one of an uplink control signal and an uplink sounding reference signal.

19. The radio base station according to claim 18, wherein
the uplink control signal is any of downlink radio quality information and a scheduling request.

20. A radio base station configured to transmit downlink data to a mobile station by using a downlink radio resource persistently allocated with a predetermined period at and after a downlink radio resource allocation start moment, and configured to receive uplink data by using an uplink radio resource persistently allocated with a predetermined period at and after an uplink radio resource allocation start moment, the radio base station comprising:

a downlink persistent allocation signal transmitter configured to transmit a persistent allocation signal indicating the downlink radio resource allocation start moment to the mobile station;
a downlink communication unit configured to transmit the downlink data by using the downlink radio resource allocated at and after the downlink radio resource allocation start moment;
an uplink persistent allocation signal transmitter configured to transmit a persistent allocation signal indicating the uplink radio resource allocation start moment to the mobile station; and
an uplink communication unit configured to receive the uplink data by using the uplink radio resource allocated at and after the uplink radio resource allocation start moment, wherein
the downlink persistent allocation signal transmitter determines the downlink radio resource allocation start moment so that the timing of receiving acknowledgement information for the downlink data does not coincide with the timing of receiving the uplink data.

21. A radio base station configured to transmit downlink data to a mobile station by using a downlink radio resource persistently allocated with a predetermined period at and after a downlink radio resource allocation start moment, the radio base station comprising:

a downlink persistent allocation signal transmitter configured to transmit a persistent allocation signal indicating the downlink radio resource allocation start moment to the mobile station; and
a downlink communication unit configured to transmit the downlink data using the downlink radio resource allocated at and after the downlink radio resource allocation start moment, wherein
the downlink persistent allocation signal transmitter determines the downlink radio resource allocation start moment so that an available radio resource for acknowledgement information can be specified by the persistent allocation signal.

22. A radio base station configured to transmit downlink data to a mobile station by using a downlink radio resource persistently allocated with a predetermined period at and after a downlink radio resource allocation start moment, the radio base station comprising:

a downlink persistent allocation signal transmitter configured to transmit a persistent allocation signal indicating the downlink radio resource allocation start moment and the downlink radio resource to the mobile station; and
a downlink communication unit configured to transmit the downlink data by using the downlink radio resource allocated at and after the downlink radio resource allocation start moment, wherein
the downlink persistent allocation signal transmitter determines the downlink radio resource so that the resource does not overlap with a resource allocated to a broadcast channel, a resource allocated to dynamic broadcast channels, a resource allocated to paging channels, a resource allocated to random access response channels, and a resource allocated to MBMS channels.

23. The radio base station according to claim 22, wherein
the downlink persistent allocation signal transmitter allocates the downlink radio resources from one end of an entire radio resource space in a system, and allocates the resources allocated to the broadcast channel, dynamic broadcast channels, paging channels, random access response channels, and MBMS channels from the other end of the entire radio resource space.

24. The radio base station according to claim 23, wherein
the downlink persistent allocation signal transmitter transmits the persistent allocation signal when a downlink radio resource determined based on downlink quality information and an error rate notified from the mobile station is different from the downlink radio resource.

25. The radio base station according to claim 23, wherein
the downlink persistent allocation signal transmitter transmits the persistent allocation signal when a predetermined or longer time passes after the transmission of the persistent allocation signal.

26. A radio base station configured to transmit downlink data to a mobile station by using a downlink radio resource persistently allocated with a predetermined period at and after a downlink radio resource allocation start moment, the radio base station comprising:

a transmission state manager configured to manage a transmission state of the mobile station;
a downlink persistent allocation signal transmitter configured to transmit a persistent allocation signal indicating the downlink radio resource allocation start moment and the downlink radio resource to the mobile station; and
a downlink communication unit configured to transmit the downlink data by using the downlink radio resource allocated at and after the downlink radio resource allocation start moment, wherein
the downlink persistent allocation signal transmitter transmits the persistent allocation signal when the transmission state of the mobile station is Off, and when a size of data addressed to the mobile station is larger than a first threshold and smaller than a second threshold.

27. A radio base station configured to transmit downlink data to a mobile station by using a downlink radio resource persistently allocated with a predetermined period at and after a downlink radio resource allocation start moment, the radio base station comprising:

a downlink persistent allocation signal transmitter configured to transmit a persistent allocation signal indicating the downlink radio resource allocation start moment and the downlink radio resource to the mobile station; and

a downlink communication unit configured to transmit the downlink data by using the downlink radio resource allocated at and after the downlink radio resource allocation start moment, and to receive acknowledgement information for the downlink data, wherein

the downlink persistent allocation signal transmitter transmits the persistent allocation signal when the result of decoding the acknowledgement information for initial transmission of the downlink data immediately after the downlink radio resource allocation start moment is DTX, or when NACK or DTX is obtained at least a predetermined number of times in a row, as the result of decoding the acknowledgement information for initial transmission of the downlink data

28. A communication control method by which a radio base station transmits downlink data to a mobile station by using a downlink radio resource persistently allocated with a predetermined period at and after the downlink radio resource allocation start moment, the method comprising:

a step A of transmitting a persistent allocation signal indicating the downlink radio resource allocation start moment and the downlink radio resource from the radio base station to the mobile station; and

a step B of transmitting the downlink data from the radio base station by using the downlink radio resource allocated at and after the downlink radio resource allocation start moment determined based on the persistent allocation signal, wherein

in the step A, the radio base station determines the downlink radio resource so that the resource does not overlap with a resource allocated to a broadcast channel, a resource allocated to dynamic broadcast channels, a resource allocated to paging channels, a resource allocated to random access response channels, and a resource allocated to MBMS channels.

29. A communication control method by which a radio base station transmits downlink data to a mobile station by using a downlink radio resource persistently allocated with a predetermined period at and after the downlink radio resource allocation start moment, the method comprising:

a step A of managing a transmission state of the mobile station by the radio base station;

a step B of transmitting a persistent allocation signal indicating the downlink radio resource allocation start moment and the downlink radio resource from the radio base station to the mobile station; and

a step C of transmitting the downlink data from the radio base station by using the downlink radio resource allocated at and after the downlink radio resource allocation start moment determined based on the persistent allocation signal, wherein

in the step B, the radio base station transmits the persistent allocation signal when the transmission state of the mobile station is Off, and when a size of data addressed to the mobile station is larger than a first threshold and smaller than a second threshold.

30. A communication control method by which a radio base station transmits downlink data to a mobile station by using a downlink radio resource persistently allocated with a predetermined period at and after the downlink radio resource allocation start moment, the method comprising:

a step A of transmitting a persistent allocation signal indicating the downlink radio resource allocation start moment and the downlink radio resource from the radio base station to the mobile station; and

a step B of transmitting the downlink data from the radio base station by using the downlink radio resource allocated at and after the downlink radio resource allocation start moment determined based on the persistent allocation signal, and receiving by the radio base station acknowledgement information for the downlink data, wherein

in the step A, the radio base station transmits the persistent allocation signal when the result of decoding the acknowledgement information for initial transmission of the downlink data immediately after the downlink radio resource allocation start moment is DTX, or when NACK or DTX is obtained at least a predetermined number of times in a row, as the result of decoding the acknowledgement information for initial transmission of the downlink data.

FIG. 1

# FIG. 2

radio base station eNB

- 11 RB USE AMOUNT CALCULATION PROCESSOR UNIT
- 12 DRX ON DURATION SETTING PROCESSOR UNIT
- 13 TALK SPURT STATE MANAGER UNIT
- 15 ACKNOWLEDGEMENT INFORMATION RECEPTION PROCESSOR UNIT
- 16 STATE MISMATCH DETECTION PROCESSOR UNIT
- 14 PDSCH TRANSMISSION PROCESSOR UNIT
- 17 PDCCH TRANSMISSION PROCESSOR UNIT

EP 2 278 844 A1

# FIG. 3

Resource Block (Frequecy resource)

Sub-frame (Time resource)

Persistent Sub-frame #0 — DL_Resource (0)

Persistent Sub-frame #1 — DL_Resource (1)

Persistent Sub-frame #2 — DL_Resource (2)

Persistent Sub-frame #m — DL_Resource (m)

RB USE RATE (DL_Resource(m))

Persistent Sub-frame #M-2 — DL_Resource (M-2)

Persistent Sub-frame #M-1 — DL_Resource (M-1)

30

# FIG. 4

START

S401 ~ | m = 0 |

m : Persistent Sub-frame index
(m = 1...M)

| DL_Resource (m) = 0 | ~S402

| DL_Resource (m) += $RB_{SCH/P\text{-}BCH}$ | ~S403

| DL_Resource (m) += $RB_{D\text{-}BCH}$ | ~S404

| DL_Resource (m) += $RB_{PCH}$ | ~S405

| DL_Resource (m) += $RB_{RACH,ves}$ | ~S406

| DL_Resource (m) += $RB_{MBMS,tmp}$ | ~S407

| DL_Resource (m) += $RB_{Persistent,DL}$ | ~S408

| m++ | ~S409

S410

m < M ?    YES

NO

END

# FIG. 5

| Persistent Sub-frame | #0 | #1 | #2 | #3 | #4 | #5 | #6 | #7 | #8 | #9 |
|---|---|---|---|---|---|---|---|---|---|---|
| RB USE AMOUNT | 2 | 3 | 8 | 7 | 10 | 4 | 6 | 5 | 2 | 5 |

| #10 | #11 | #12 | #13 | #14 | #15 | #16 | #17 | #18 | #19 |
|---|---|---|---|---|---|---|---|---|---|
| 10 | 11 | 8 | 7 | 10 | 4 | 6 | 5 | 2 | 5 |

## FIG. 6

# FIG. 7

| TF # | $CQI_{wideband,average}$ (UP) | $CQI_{wideband,average}$ (DOWN) |
|---|---|---|
| TF #0 | $12 \leq CQI_{wideband,average}$ | — |
| TF #1 | $8 \leq CQI_{wideband,average} < 12$ | $7 \leq CQI_{wideband,average} < 11$ |
| TF #2 | $4 \leq CQI_{wideband,average} < 8$ | $3 \leq CQI_{wideband,average} < 7$ |
| TF #3 | — | $CQI_{wideband,average} < 3$ |

# FIG. 8

| TF # | Payload size [bits] | Modulation | NUMBER OF RBs |
|---|---|---|---|
| TF #0 (DL Persistent) | 320 | 16QAM | 1 |
| TF #1 (DL Persistent) | 320 | QPSK | 2 |
| TF #2 (DL Persistent) | 320 | QPSK | 4 |
| TF #3 (DL Persistent) | 320 | QPSK | 8 |

# FIG. 9

| TF # | $CQI_{wideband,average}$ (Initial) |
|---|---|
| TF #0 | $Y_{DL,0,initial} \leq CQI_{wideband,average}$ |
| TF #1 | $Y_{DL,1,initial} \leq CQI_{wideband,average} < Y_{DL,0,initial}$ |
| TF #2 | $Y_{DL,2,initial} \leq CQI_{wideband,average} < Y_{DL,1,initial}$ |
| TF #3 | $CQI_{wideband,average} < Y_{DL,2,initial}$ |

FIG. 10(A)

TIME RESOURCE

FREQUENCY
RESOURCE

FIG. 10(B)

TIME RESOURCE

FREQUENCY
RESOURCE

# FIG. 11

DRX RECEPTION TIMING OF THE UE

PERSISTENT SUB-FRAME NUMBER

| #0 | #1 | #2 | #3 | #4 | #5 | #6 | #7 | #8 | #9 | #10 | #11 | #12 | #13 | #14 | #15 | #16 | #17 | #18 | #19 |

RECEPTION TIMING OF UPLINK CONTROL SIGNAL

← Candidate Sub-frame＝Persistent Sub-frame #0

4 sub-frame

← Candidate Sub-frame＝Persistent Sub-frame #1

4 sub-frame

← Candidate Sub-frame＝Persistent Sub-frame #2

4 sub-frame

← Candidate Sub-frame＝Persistent Sub-frame #3

4 sub-frame

← Candidate Sub-frame＝Persistent Sub-frame #4

4 sub-frame

← Candidate Sub-frame＝Persistent Sub-frame #5

4 sub-frame

DL-SCH TO WHICH PERSISTENT SCHEDULING IS APPLIED

ACKNOWLEDGEMENT INFORMATION FOR DL-SCH

EP 2 278 844 A1

# FIG. 12

DRX RECEPTION TIMING OF THE UE

| #0 | #1 | #2 | #3 | #4 | #5 | #6 | #7 | #8 | #9 | #10 | #11 | #12 | #13 | #14 | #15 | #16 | #17 | #18 | #19 |

PERSISTENT SUB-FRAME NUMBER

RECEPTION TIMING OF UL-SCH TO WHICH UPLINK PERSISTENT SCHEDULING IS APPLIED

4 sub-frame ←— Candidate Sub-frame＝Persistent Sub-frame #0

4 sub-frame ←— Candidate Sub-frame＝Persistent Sub-frame #1

4 sub-frame ←— Candidate Sub-frame＝Persistent Sub-frame #2

4 sub-frame ←— Candidate Sub-frame＝Persistent Sub-frame #3

4 sub-frame ←— Candidate Sub-frame＝Persistent Sub-frame #4

4 sub-frame ←— Candidate Sub-frame＝Persistent Sub-frame #5

DL-SCH TO WHICH PERSISTENT SCHEDULING IS APPLIED

ACKNOWLEDGEMENT INFORMATION FOR DL-SCH

EP 2 278 844 A1

## INTERNATIONAL SEARCH REPORT

| | International application No. |
|---|---|
| | PCT/JP2009/058587 |

A.  CLASSIFICATION OF SUBJECT MATTER
*H04W72/04(2009.01)i, H04J1/00(2006.01)i, H04J11/00(2006.01)i*

According to International Patent Classification (IPC) or to both national classification and IPC

B.  FIELDS SEARCHED

Minimum documentation searched (classification system followed by classification symbols)
H04W72/04, H04J1/00, H04J11/00

Documentation searched other than minimum documentation to the extent that such documents are included in the fields searched
| | | | |
|---|---|---|---|
| Jitsuyo Shinan Koho | 1922-1996 | Jitsuyo Shinan Toroku Koho | 1996-2009 |
| Kokai Jitsuyo Shinan Koho | 1971-2009 | Toroku Jitsuyo Shinan Koho | 1994-2009 |

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
|---|---|---|
| Y | 3GPP TS 36.300 V8.4.0 (2008-03), 2008.03, pages | 1-25,28 |
| A | 23 to 25, 61 to 62 | 26-27,29-30 |
| Y | JP 2000-236339 A  (ATR Adaptive Communications | 1-25,28 |
| A | Research Laboratories), 29 August, 2000 (29.08.00), & JP 3049239 B | 26-27,29-30 |
| Y | NTT DoCoMo, Inc., "UL ACK/NACK resource | 1-25,28 |
| A | allocation for DL semi-persistent scheduling", 3GPP TSG RAN WG2 #61bis R2-081857, 2008.03.31 | 26-27,29-30 |

☒  Further documents are listed in the continuation of Box C.       ☐   See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 05 June, 2009 (05.06.09) | 07 July, 2009 (07.07.09) |

| Name and mailing address of the ISA/ | Authorized officer |
|---|---|
| Japanese Patent Office | |
| Facsimile No. | Telephone No. |

Form PCT/ISA/210 (second sheet) (April 2007)

**INTERNATIONAL SEARCH REPORT**

International application No.

PCT/JP2009/058587

C (Continuation).   DOCUMENTS CONSIDERED TO BE RELEVANT

| Category* | Citation of document, with indication, where appropriate, of the relevant passages | Relevant to claim No. |
|---|---|---|
| A | Dajie Jiang, Haiming Wang, Esa Malkamaki, Esa Tuomaala, "Principle and Performance of Semi-persistent Scheduling for VoIP in LTE System", Wireless Communications, Networking and Mobile Computing, 2007. WiCom 2007. International Conference on, 2007.10.08, pages 2861 to 2864 | 1-30 |
| A | QUALCOMM Europe, "Semi-persistent scheduling", 3GPP TSG-RAN WG2 #60, R2-075166, 2007.11.05 | 1-30 |

Form PCT/ISA/210 (continuation of second sheet) (April 2007)